# EUROPÄISCHE PATENTSCHRIFT

(11) **EP 1 362 304 B1**
(45) Veröffentlichungstag und Bekanntmachung des Hinweises auf die Patenterteilung: **19.09.2007**
(21) Anmeldenummer: 02719878.7
(22) Anmeldetag: 20.02.2002
(51) Int. Cl.: G06F 17/30, G05B 19/418

(54) **SYSTEM UND VERFAHREN ZUM SPEICHERPLATZOPTIMIERTEN ABSPEICHERN UND GENERIEREN VON WEBSEITEN**
SYSTEM AND METHOD FOR SAVING AND GENERATING WEB PAGES, WHICH OPTIMISES STORAGE SPACE
SYSTEME ET PROCEDE POUR GENERER ET MEMORISER DES PAGES WEB TOUT EN OPTIMISANT L'ENCOMBREMENT EN MEMOIRE

(30) Priorität: 21.02.2001 DE 10108258; 24.10.2001 DE 10152566
(43) Veröffentlichungstag der Anmeldung: 19.11.2003
(73) Patentinhaber: VEGA Grieshaber GmbH & Co., D-77709 Wolfach (DE)
(72) Erfinder: FAIST, Fridolin, 77709 Oberwolfach (DE); GROS, Thomas, 56479 Neustadt/Westerwald (DE)
(74) Vertreter: Preuss, Udo
(86) Internationale Anmeldenummer: PCT/EP2002/001784
(87) Internationale Veröffentlichungsnummer: WO 2002/067141

(56) Entgegenhaltungen:
- EP-A- 0 889 421
- EP-A- 0 917 034
- US-A- 5 805 442
- MI-JOUNG CHOI ET AL: "An Efficient Embedded Web Server for Web-based Network Element Management" 2000 XP010376683 Seite 196, Absatz 2 -Seite 197, letzter Absatz

## Beschreibung

Die vorliegende Erfindung betrifft ein System und ein Verfahren zum Abspeichern von in einer Seitenbeschreibungssprache wie HTML definierten Webseiten-Vorlagen in Prozessgeräten und das Generieren einer Vielzahl von unterschiedlichen Webseiten auf der Grundlage einer einzigen abgespeicherten Vorlage, die in einer Seitenbeschreibungssprache wie beispielsweise HTML abgefasst ist. Insbesondere betrifft die Erfindung eine Webseiten-Vorlage, die in einer Seitenbeschreibungssprache definiert ist und zum Abspeichern auf einem Webserver eines Prozessgerätes bestimmt ist. Als Prozessgeräte sind insbesondere Füllstandmessgeräte, Druckmessgeräte, Endschalter, Feldgeräte, Sensoren, Aktuatoren und Schnittstellenwandler mit einem geräteseitigen Web-Server mit Datenspeicher zu subsumieren.

Des Weiteren betrifft die Erfindung individualisierbare Webseiten-Vorlagen, die in einfacher Weise und insbesondere Speicherplatz reduzierend von einem Anwender in gewünschter Weise veränderbar sind. Die Veränderungen sollen insbesondere die auf der abgespeicherten Webseiten-Vorlage basierenden Darstellungen auf einem Display, wie beispielsweise einem Monitor, an die speziellen Bedürfnisse eines Anwenders bzw. Betrachters angepasst werden. Schließlich betrifft die Erfindung Systeme, Verfahren und Vorrichtungen zum speicherplatzoptimierten Abspeichern von Webseiten-Vorlagen in einem Prozessgerät. Insbesondere betrifft es auch ein- oder mehrere Platzhalter enthaltende Webseitenvorlagen oder Schlüsselworte enthaltende Webseiten-Vorlagen.

Aufgrund der stetigen Ausweitung des Ethernets als auch des Internets im Officebereich mit all seinen bekannten Vorteilen sehen sich in den letzten Jahren auch die Hersteller von industriellen Anlagen, insbesondere Prozesssteuerungen, veranlasst, die vielerorts vorhandenen Werkzeuge zu nutzen. Besonderes Augenmerk legen die Hersteller hierbei auf die Entwicklung von geräteseitigen Web-Servern, d.h. in Prozessgeräten integrierten Web-Servern. Üblicherweise werden diese Web-Server mit fest hinterlegten Webseiten betrieben, so dass Anwender, bei Vorhandensein der notwendigen Infrastruktur, über jeden Webbrowser ein Set von Statusinformationen zur Anzeige bringen können.

Ein dynamischer Webseiten-Generator wird beispielsweise in der EP 0 889 421 A1 beschrieben. Dieser Webseiten-Generator erzeugt auf Basis einer globalen Vorlage anwenderspezifische Vorlagen, indem der Webseiten-Generator auf anwenderspezifische Daten zurückgreift, welche Server-seitig in einer Datenbank abgelegt sind. Unter Rückgriff auf diese anwenderspezifischen Daten wird eine Vielzahl anwenderspezifischer Vorlagen erzeugt, welche von einem Web-Server abgespeichert werden können. Da jedoch das verfügbare Speichervolumen im Bereich der Füllstandsmesstechnik bei Prozessgeräten in aller Regel stark begrenzt ist, kann das in der EP 0 889 421 A1 beschriebene Verfahren dort nicht eingesetzt werden.

### Copyright Notice

A portion of the disclosure of this patent document contains material which is subject to copyright protection. The copyright owner has no objection to the facsimile reproduction by anyone of the patent document or patent disclosure as it appears in the Patent and Trademark Office patent file or records, but otherwise reserves all copyright rights whatsoever.

### Darstellung der Erfindung

Erfindungsgemäße Systeme bieten dem Anwender die Möglichkeit individuelle Informationen aus dem System zusammenzustellen. In einer Weiterentwicklung sind dann diese individuellen HTML-Seiten mit Sprachelementen - diese werden nachfolgend auch als Schlüsselworte bezeichnet - erweiterbar, die der geräteseitige Web-Server interpretiert und zur Laufzeit ersetzt. Damit ist es möglich, beispielsweise aktuelle Messwerte anzuzeigen. Insbesondere ist es aber auch möglich, nur bestimmte Messwerte anzuzeigen, die von der jeweiligen Zielgruppe gewünscht sind. Allerdings erfordert dies einen nicht unerheblichen Bedarf an nichtflüchtigem Speicher, da alle entsprechenden Vorlagen in einer Seitenbeschreibungssprache wie HTML-Code einzeln abgespeichert werden müssen.

Wenn beispielsweise mehrere Feldgeräte wie Steuereinheiten, Sensoren und/oder Aktuatoren (Füllstandmessgeräte, Druckmessgeräte, Endschalter etc.) mit sogenannten Auswertgeräten verbunden sind, so ist es mit den zuvor beschriebenen Systemen möglich, nur bestimmte oder alle Messwerte anzuzeigen. Als Beispiel für Auswertgeräte seien hier die unter der Marke VEGAMET^{®} der Serien 500 und 600 vertriebenen Geräte genannt. Als Auswertzentrale wird beispielhaft auf das Gerät VEGALOG^{®} 571 verwiesen. Zwischen diesen Auswertgeräten bzw. der Auswertzentrale und einer damit verbundenen Abfrageeinrichtung wie ein PC, Notebook oder dergleichen ist ein Schnittstellenwandler angeordnet, der auch als Web-Server eingesetzt werden kann. Ein solches Gerät ist beispielsweise unter der Marke VEGACOM^{®} bekannt. Mittels eines solchen Gerätes werden die Messwerte der angeschlossenen Feldgeräte im HTML-Format auf dem Ethernet-Netzwerk oder dem Internet-Netzwerk zur Verfügung gestellt.

Grundsätzlich ist also festzustellen, dass allgemein Prozessgeräte wie ein Feldgerät, also ein Füllstandmessgerät, Drucksensor, etc. oder die Auswertzentralen oder Auswertgeräte der zuvor genannten Art auch als Web-Server arbeiten können.

Die Webseite wird grundsätzlich wie folgt aufgerufen. Ein Web-Browser stellt eine Verbindung zum Web-Server her und fordert diesen auf, eine bestimmte HTML-Datei zu übermitteln. Der Web-Server sucht in seinem Datenspeicher (beispielsweise eine Festplatte, EPROM, Flash) nach der HTML-Datei und überträgt diese an den Browser. Bei diesem allgemeinen Verfahren für die Bereitstellung von HTML-Seiten wird die HTML-Datei nicht ausgewertet und daher ist es nicht möglich, Prozessinformationen an den Browser zu übermitteln. Jede Information für den Browser muss in einer eigenen HTML-Datei hinterlegt werden. Zwar gibt es bereits hinlänglich bekannte Verfahren für dynamische Inhalte von Webseiten, wie CGI-Programme oder Datenbanken, die in der Internetwelt verwendet werden, jedoch sind diese Verfahren für Prozessgeräte nicht verwendbar, da hier nicht genügend Rechenleistung, Speicher und auch die notwendigen Programme zur Verfügung stehen.

Gemäß einem Aspekt der Erfindung sieht ein neues Verfahren für die Bereitstellung von HTML-Seiten mit dynamischem Inhalt in Prozessgeräten vor, dass ein Web-Browser eine Verbindung zum Web-Server herstellt und diesen auffordert, eine bestimmte HTML-Datei zu übermitteln. Der Web-Server sucht in seinem Datenspeicher nach der abgespeicherten HTML-Vorlage. Im Gegensatz zu dem vorgenannten Verfahren wird aber nun vom Web-Server ein sogenannter Interpreter ausgeführt, der vordefinierte Schlüsselworte aus der HTML-Vorlage mit aktuellen Werten aus einer Datenbank ersetzt und HTML-Code erzeugt. Diese neu gewonnene Datei wird dann an den Browser weitergeleitet. Mittels dieses einen Interpreter zwischenschaltenden Verfahrens werden die Informationen der abgespeicherten HTML-Vorlage mit den Informationen aus der Datenbank ergänzt und dann dem Browser zur Verfügung gestellt. Damit ist es erstmals möglich, aus dem Browser auf die aktuellen Informationen der Prozessgeräte zuzugreifen, und das auch mit Mitteln, die bei Prozessgeräten noch hinsichtlich der Kosten sinnvoll einbaubar sind, d.h. es werden nur ein kostengünstiger Prozessor und wenig Speicher benötigt. Bei diesem Verfahren bzw. System ist es zwar möglich, neu generierte HTML-Dateien zu laden, so dass ein Kunde individuelle Informationen aus dem System zusammenstellen kann. Die Gestaltungsmöglichkeiten sind allerdings noch begrenzt und es müssen viele Webseiten abgespeichert sein, was einen nicht unerheblichen Bedarf an nichtflüchtigem Speicher erforderlich macht, der aber bei Prozessgeräten auch im Hinblick auf die Kosten nicht in größeren Mengen bereitgestellt werden kann.

Dementsprechend ist gemäß einem weiteren Aspekt der Erfindung in einer Vorlage in einer Seitenbeschreibungssprache, die auf einem Web-Server abgespeichert ist, zumindest ein Platzhalter vorgesehen. Dieser Platzhalter wird durch einen Parameterwert ersetzt, der bei der Anforderung der Webseite durch den Web-Browser mitgesandt wird. Dieser Parameterwert ist vom Anwender festlegbar. Der Parameterwert bestimmt somit den Inhalt der auf der Grundlage der abgespeicherten Vorlage vom Web-Browser dargestellten Webseite, da die Vorlage entsprechend dem übergebenen Parameterwert geändert wird.

Erstmals ist es also möglich, dass ein Anwender mit seiner Anforderung einer Webseite mit Hilfe eines Web-Browsers Einfluss nimmt auf die ihm tatsächlich übermittelte Webseite, indem er mit seiner Anforderung einen Parameterwert übergibt und dadurch eine auf der abgespeicherten Vorlage basierende, diese aber verändernde neue Vorlage generiert. Trotz der vielfältigen Veränderungsmöglichkeiten ist aber nur eine einzige abgespeicherte Webseiten-Vorlage (insbesondere HTML-Datei) im Web-Server abzuspeichern. Damit wird erfindungsgemäß die Anzahl der auf einem Web-Server abzuspeichernden Vorlagen auf ein Minimum reduziert. Der übergebene Parameterwert repräsentiert dabei die vom Anwender gewünschte Darstellung einer abgespeicherten Vorlage.

Eine Ausführungsform der Erfindung sieht vor, dass ein Parameter aus Parametername und Parameterwert besteht. In der vom Browser angeforderten Vorlage wird überall, wo der Platzhalter mit dem Parametername identisch ist, der Platzhalter durch den übergebenen Parameterwert ersetzt. Dadurch wird eine neue Vorlage generiert, die in der vom Benutzer gewünschten Form abgewandelt ist und zu einer neuen Darstellung der Webseite führt.

Wie bereits zuvor angedeutet, können mit dem Aufruf einer Webseite auch mehrere Parameterwerte übergebenen werden, um ausgehend von der abgespeicherten Vorlage eine an verschiedenen Stellen abgewandelte neue Vorlage zu generieren, die dann an den Browser übertragen wird. Es werden also verschiedene Platzhalter in der abgespeicherten Vorlage durch verschiedene Parameterwerte ersetzt. Hierzu werden mit dem Aufruf durch den Browser mehrere Parameter aus Pararnetemamen und Parameterwert an den Web-Server übergeben.

Allgemein ist festzustellen, dass erstmals in einer auf einem Web-Server abgespeicherten Vorlage (HTML-Datei) ein oder mehrere Platzhalter integriert sind, die durch Parameterwerte ersetzt werden, die vom Anwender vorgebbar sind. Durch das Ersetzen dieser Platzhalter durch den vom Anwender festgelegten Parameterwert wird die angezeigte Webseite gemäß den Wünschen des Anwenders beeinflusst, insbesondere werden dadurch nur bestimmte Messstellen angezeigt und nicht alle Messstellen.

Wie bereits zuvor angedeutet, ist es möglich, das die abgespeicherte Vorlage auch sogenannte Schlüsselworte beinhaltet, die durch Informationen aus einem Prozessabbild, d.h. aktuelle Prozess- bzw. Messwerte, ersetzt werden. Dieses Ersetzen der Schlüsselworte durch die aktuellen Informationen aus dem Prozessabbild erfolgt mittels eines sogenannten Interpreters. Nähere Einzelheiten hierzu finden sich im mit "Interpreter" gekennzeichneten Abschnitt der Figurenbeschreibung.

Eine bevorzugte Ausführungsform der Erfindung sieht nun vor, dass das Ersetzen eines oder mehrerer Platzhalter in der auf dem Web-Server abgespeicherten Vorlage vor dem Ersetzen der Schlüsselworte erfolgt.

Grundsätzlich ist ein Web-Server vorhanden, insbesondere in einem Prozessgerät, der in einem Datenspeicher eine vorbestimmte Anzahl von sogenannten Vorlagen in einer Seitenbeschreibungssprache umfasst. Dieser Web-Server ist über eine Datenverbindung, wie beispielsweise das Ethernet oder das WorldWideWeb oder in anderer Weise mit einem Web-Browser verbindbar, der von einem Anwender zu bedienen ist. Der Web-Browser dient zur Anforderung und Darstellung der aufgerufenen Webseiten, wozu selbstverständlich auch ein Anzeigegerät in Form eines Displays oder eines PC-Monitors gehört. Erstmals wird nun eine bestimmte Webseite mittels des Browsers vom Anwender aufgerufen, hierbei allerdings ein oder mehrere Parameterwerte mit an den Web-Server übergeben. Im Web-Server wird die angeforderte Vorlage gelesen und ein oder mehrere in der Vorlage vorhandene Platzhalter durch die mitgelieferten jeweiligen Parameterwerte ersetzt. Daraufhin wird diese neu generierte Vorlage an den Web-Browser übergeben.

Optional wird vor dem Übergeben an den Web-Browser ein Interpreter laufen gelassen, der in der zuvor genannten Weise Schlüsselworte in der neu generierten, also Parameterwerte enthaltenden Vorlage, durch aktuelle Werte aus einer Datenbank ersetzt und dann wiederum eine neue Vorlage in der Seitenbeschreibungssprache erzeugt. Hierbei ist es dann möglich, aus einer einzigen Vorlage in der vom Anwender gewünschten Weise Abwandlungen vorzunehmen und gleichzeitig aktuelle Werte in der vom Anwender gewünschten Weise darzustellen.

Diese Vorgehensweise bietet die Möglichkeit, mit nur einer abgespeicherten Vorlage, beispielsweise mit der Größe von zwei Kilobyte, eine fast beliebige Anzahl von Webseiten zu erzeugen.

Darüber hinaus ist es auch möglich, mehrere Parameter zu übergeben und dabei auch Navigationsleisten oder andere Teile der Webseite zu verändern, nicht nur die Darstellung von Messstellen.

Zusammenfassend ist festzuhalten, dass erfindungsgemäß es einem Anwender erstmals möglich ist, ein Prozessgerät mit Webserver und Datenspeicher an die für ihn zweckmäßigste Weise zu adaptieren. Diese Adaption erfolgt insbesondere durch Übersenden von in einer Seitenbeschreibungssprache definierten Webseiten-Vorlagen über eine Datenfernverbindung an das Prozessgerät. Dort werden diese auch als PDL-Dateien (page description language) bezeichneten Vorlagen abgespeichert und stehen zum Abruf durch einen Web-Browser bereit. Somit hat es ein Anwender in der Hand, welche Webseiten-Vorlagen auf einem von ihm zu benutzenden Prozessgerät darstellbar sind, wodurch eine Speicherplatzoptimierung erfolgt, da die Webserver und die entsprechenden zugehörigen Datenspeicher solcher Prozessgeräte nur mit möglichst kostengünstigen und einfachen Datenspeicherungs- und Verarbeitungseinrichtungen wie auch Servereinrichtungen ausgestattet werden können. Gemäß einem weiteren Aspekt ist es nun möglich, die auf einem solchen Datenspeicher eines Prozessgerätes abgespeicherten PDL-Vorlagen mit sogenannten Schlüsselwörtern zu versehen, die dann durch einen zuvor erläuterten Interpretor durch aktuelle Messwerte ersetzt werden. Die Messwerte können auch Prozessdaten oder ähnliches enthalten. Ein weiterer Aspekt der Erfindung sieht vor, dass eine PDL-Vorlage Platzhalter enthält, die durch Parameterwerte ersetzt werden, welche wiederum von einem Anwender mit dem Aufruf der Vorlage mittels eines Web-Browsers übermittelt werden. Damit kann speicherplatzoptimiert eine einzige Vorlage zur Generierung verschiedenster Webseiten benutzt werden. Die Modifikation erfolgt nach den Wünschen des Anwenders durch Wahl des Parameterwertes. So ist es ihm also möglich, eine einzige Vorlage anzusteuern, um entweder nur Messwerte von einer bestimmten Gruppe von Füllstandmessgeräten aufzurufen.

Schließlich ist noch darauf hinzuweisen, dass die Merkmale der Vorlagen und Anordnungen wie auch der Verfahren, die zuvor und nachfolgend im Details beschrieben sind, ohne weiteres auch einzeln oder in Gruppen miteinander kombiniert werden können. Derartige Abwandlungen liegen im Schutzbereich der Erfindung.

### Kurze Beschreibung der Zeichnungen

Im Folgenden sind zur weiteren Erläuterung und zum besseren Verständnis der Erfindung mehrere Ausführungsbeispiele unter Bezugnahme auf die beigefügten Zeichnungen näher beschrieben. Es zeigt:
- Fig. 1: eine schematische Darstellung eines allgemeinen Verfahrens für die Bereitstellung von auf HTML-Vorlagen basierenden Webseiten,
- Fig. 2: eine schematische Darstellung eines Verfahrens für die Bereitstellung von auf HTML-Vorlagen basierenden Webseiten mit dynamischem Inhalt in Prozessgeräten,
- Fig. 3 mit Teilen 1 - 7: einen schematischen Ablaufplan zur Erzeugung einer neuen HTML-Datei zur Darstellung von aktuellen Messwerten mittels Schüsselworte,
- Fig. 4 mit Teilen 1 und 2: die am Bildschirm dargestellte Messwerttabelle gemäß der in der Fig. 3 gezeigten HTML-Datei,
- Fig. 5 mit Teilen 1 bis 3: einen schematischen Ablaufplan zur Erzeugung einer neuen HTML-Datei zur Darstellung von aktuellen Messwerten mittels Schüsselworte, wobei nur ein bestimmter Bereich von Messwerten berücksichtigt wird,
- Fig. 6: die am Bildschirm dargestellte Messwerttabelle gemäß der in der Fig. 5 gezeigten HTML-Datei,
- Fig. 7: eine schematische Darstellung eines Verfahrens für die Bereitstellung von auf HTML-Vorlagen basierenden Webseiten mit Übergabe von Parametern und dynamischem Inhalt,
- Fig. 8 mit den Teilen 1 - 4: einen schematischen Ablaufplan zur Erzeugung einer neuen HTML-Datei zur Darstellung von vom Anwender individualisierten Darstellung von aktuellen Messwerten mittels Parameterübergabe und Schlüsselworte gemäß der Darstellung der Fig. 7,
- Fig. 9: die am Bildschirm dargestellte Messwerttabelle gemäß der in den Fig. 7 und 8 gezeigten HTML-Datei,
- Fig. 10: die am Bildschirm dargestellte Messwerttabelle gemäß dem in der Fig. 7 veranschaulichten Verfahrensweise bei gegenüber der Fig. 8 abgewandeltem Aufruf,
- Fig. 11: die am Bildschirm dargestellte Messwerttabelle gemäß dem in der Fig. 7 veranschaulichten Verfahrensweise bei gegenüber der Fig. 8 abgewandeltem Aufruf mit Navigationsleiste,
- Fig. 12: die am Bildschirm dargestellte Navigationsleiste, die gegenüber der der Fig. 11 abgewandelt ist durch entsprechenden Aufruf des Anwenders.
- Fig. 13: eine schematische Darstellung eines prozessverarbeitenden Systems;
- Fig. 14: eine Detaildarstellung einzelner Komponenten des Systems gemäß Figur 13;
- Fig. 15: eine schematische Darstellung einer ersten erfindungsgemäßen Ausführungsform eines prozessverarbeitenden Systems;
- Fig. 16: eine Detaildarstellung einzelner Komponenten des Systems gemäß Figur 15;
- Fig. 17: eine schematische Teildarstellung einer zweiten erfindungsgemäßen Ausführungsform eines prozessverarbeitenden Systems;
- Fig. 18: eine schematische Teildarstellung einer dritten erfindungsgemäßen Ausführungsform eines prozessverarbeitenden Systems;
- Fig. 19: eine schematische Teildarstellung einer vierten erfindungsgemäßen Ausführungsform eines prozessverarbeitenden Systems;
- Fig. 20: ein Flussdiagramm der Selektion eines Zugriffspfades für Vorlagen bei Benutzereingaben;
- Fig. 21: ein Flussdiagramm der Erzeugung von Webseiten auf der Basis von Vorlagen; und
- Fig. 22: ein Flussdiagramm des Versendens von Informationen nach vorkonfigurierten Zeitkriterien.

### Beschreibung bevorzugter Ausführungsformen der Erfindung

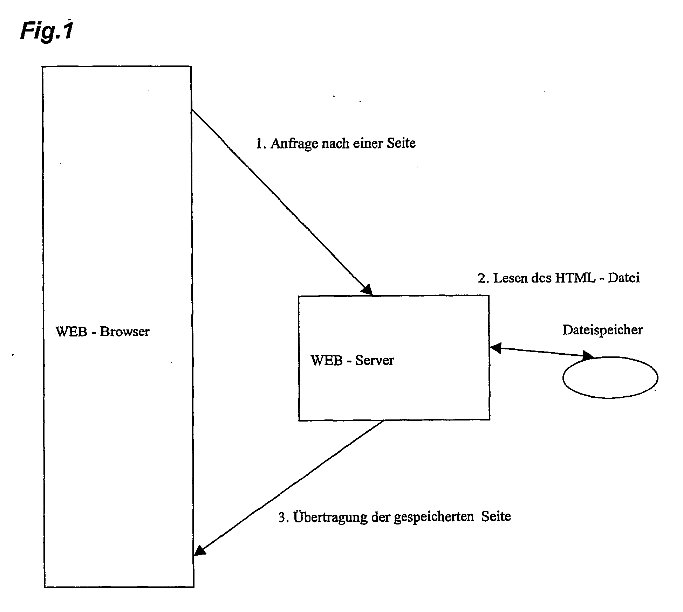

Wie in der Fig. 1 dargestellt, wird über einen Web-Browser auf einen in einem Prozessgerät befindlichen Web-Server zugegriffen und eine in einem Datenspeicher des Web-Servers abgespeicherte HTML-Vorlage aufgerufen. Diese aufgerufene HTML-Vorlage bzw. HTML-Datei wird an den Web-Browser übertragen und mittels eines hier nicht dargestellten Displays einem Anwender, der die Anfrage über den Web-Browser gestartet hat, angezeigt.

Da die Datei nicht ausgewertet wird, ist es nicht möglich, Prozessinformationen an den Web-Browser zu übermitteln. Bei dieser in der Fig. 1 dargestellten Ausführungsform muss jede Information für den Browser in einer eigenen HTML-Datei hinterlegt sein.

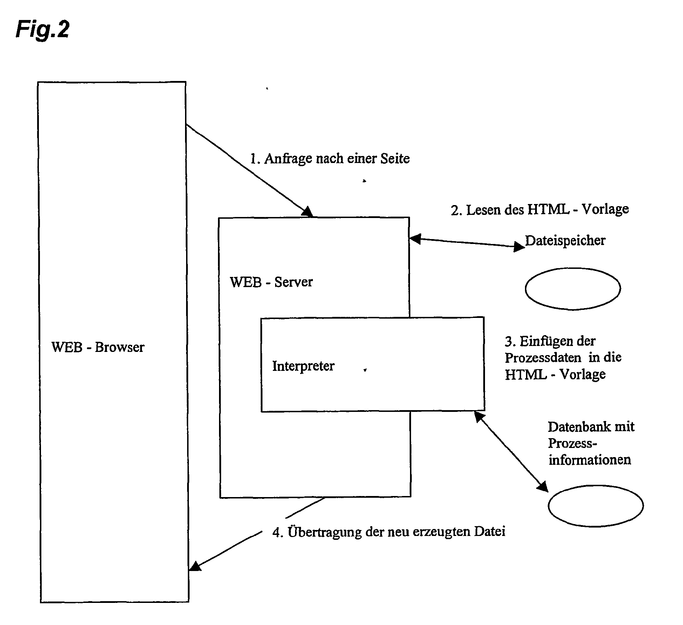

Bei dem in der Fig. 2 gezeigten Ausführungsbeispiel wird in Abwandlung zu der in der Fig. 1 dargestellten Verfahrensweise ein Interpreter eingeschaltet. Hier stellt der Web-Browser eine Verbindung zum Web-Server her und fordert diesen auf, eine bestimmte Datei zu übermitteln. Der Web-Server sucht in seinem Datenspeicher nach der entsprechenden HTML-Vorlage. Vom Server wird nun ein Interpreter ausgeführt, der vordefinierte Schlüsselworte aus der Vorlage mit aktuellen Werten aus der Datenbank ersetzt und HTML-Code erzeugt, d.h. eine neue HTML-Datei generiert. Diese neu generierte HTML-Datei wird dann an den Browser weitergeleitet. Mit anderen Worten, der beispielsweise in der Programmiersprache C geschriebene Interpreter "scant" die Vorlage in Bezug auf die festgelegten Schlüsselwörter. Sobald ein Schlüsselwort aufgefunden ist, wird es durch die zugewiesenen, in einem Speicher abgelegten oder gerade aufgerufenen Werte ersetzt. Die Vorlage selbst bleibt eine HTML-Datei.

Erstmals werden durch den Einsatz eines Interpreters die Informationen einer HTML-Vorlage mit den Informationen aus einer Datenbank ergänzt und dann dem Browser zur Verfügung gestellt. In der Datenbank sind die aktuellen Prozessinformationen, wie beispielsweise Füllstandshöhe, Druck etc. bereitgestellt. Auf diese Weise ist es möglich, mittels des Browsers auf die aktuellen Informationen der Prozessgeräte zuzugreifen.

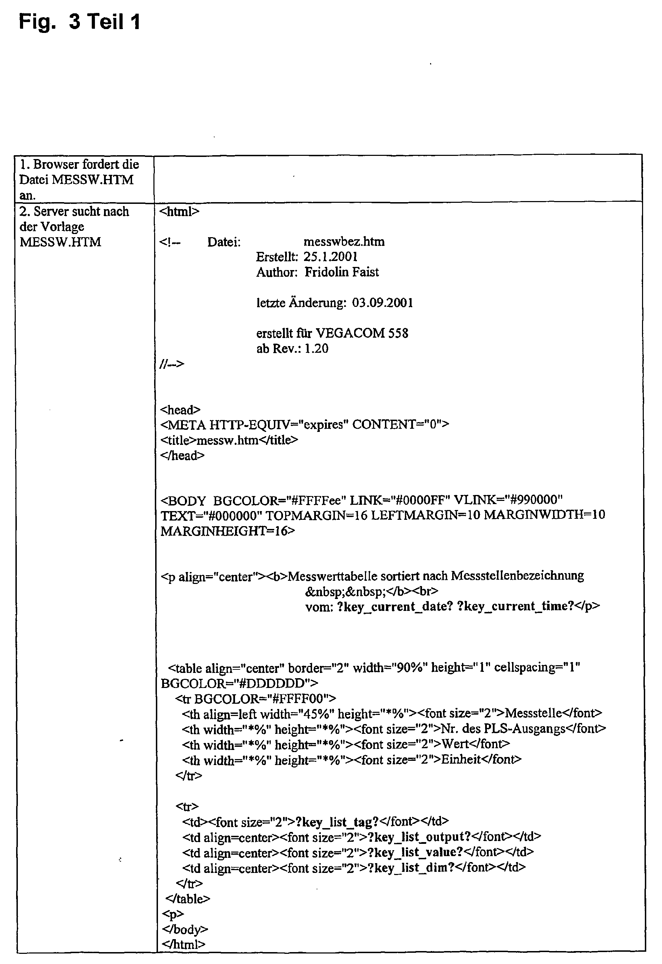

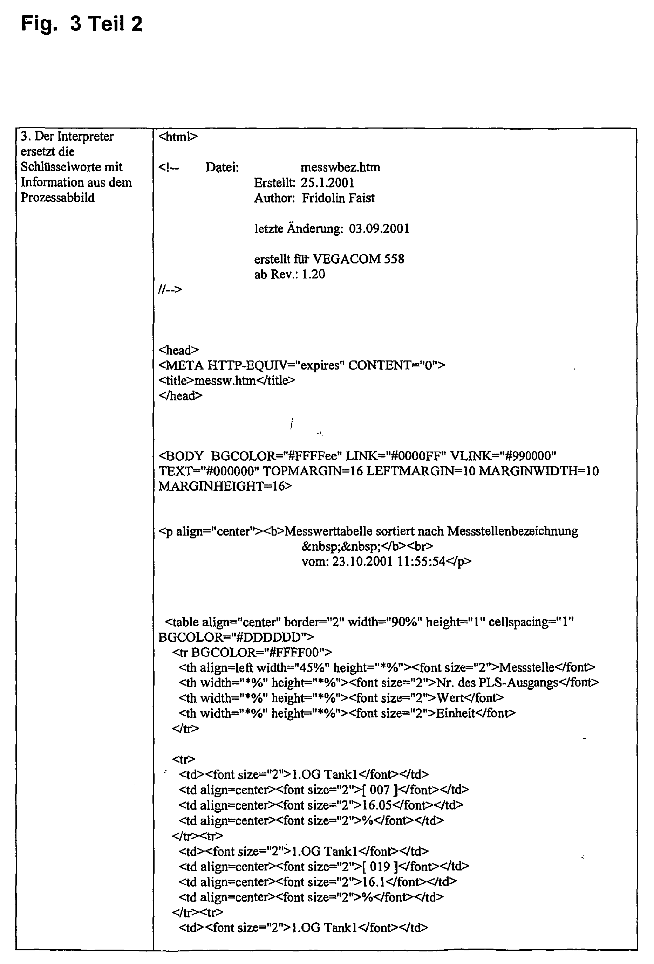

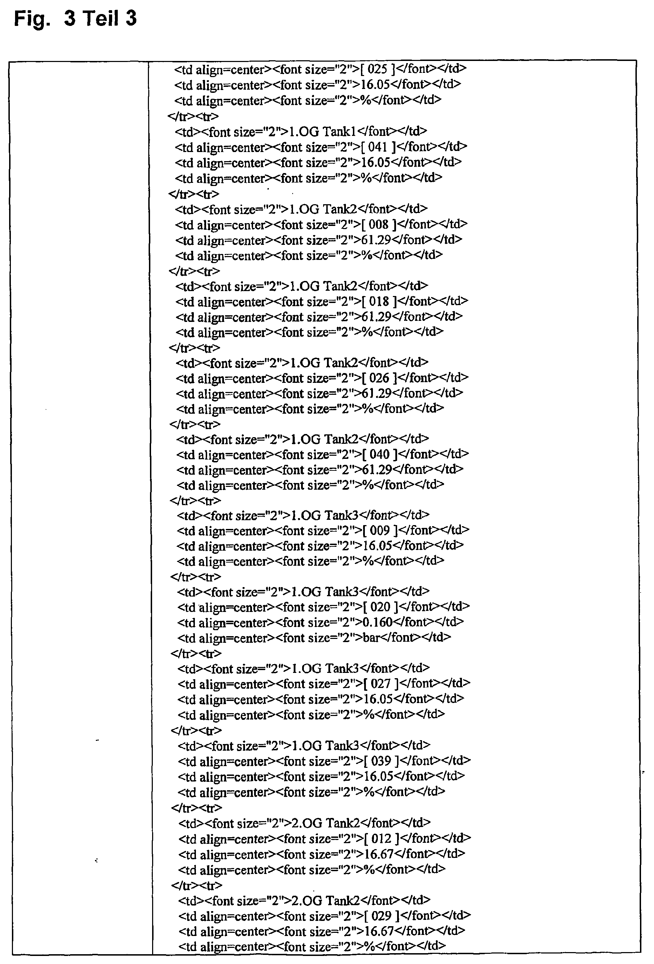

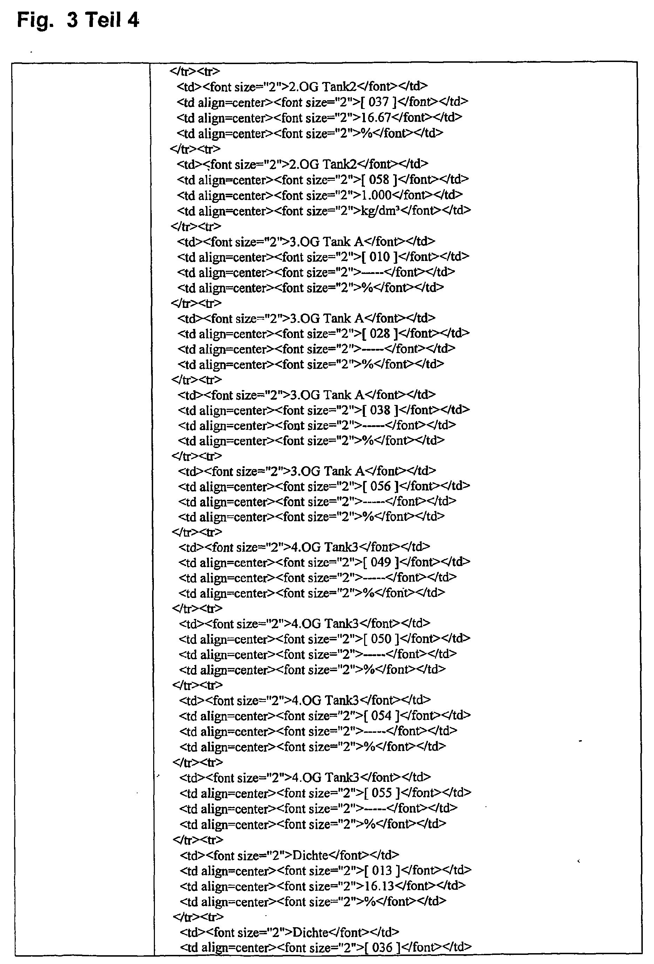

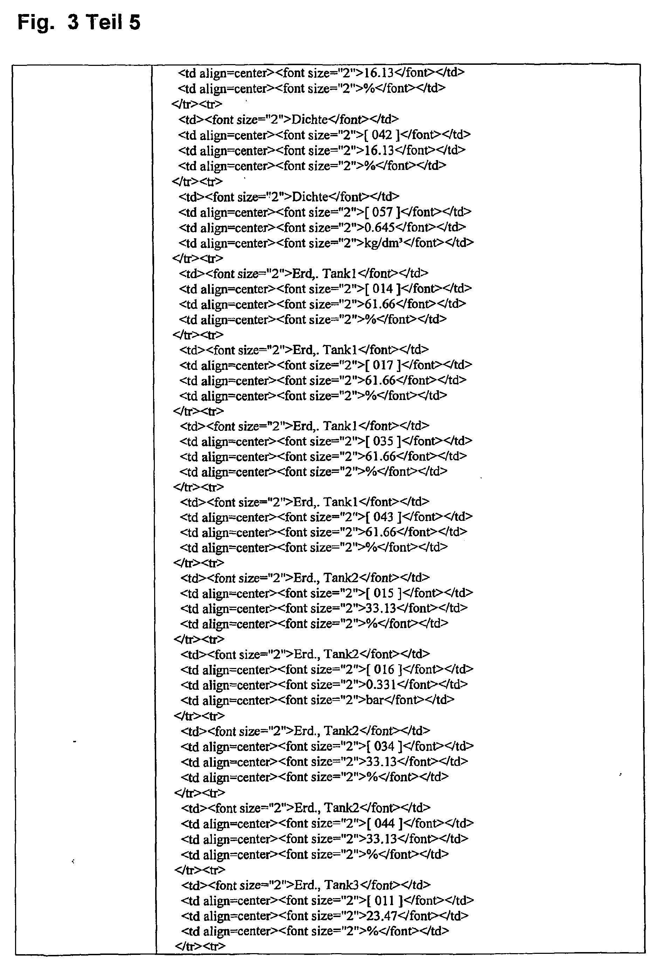

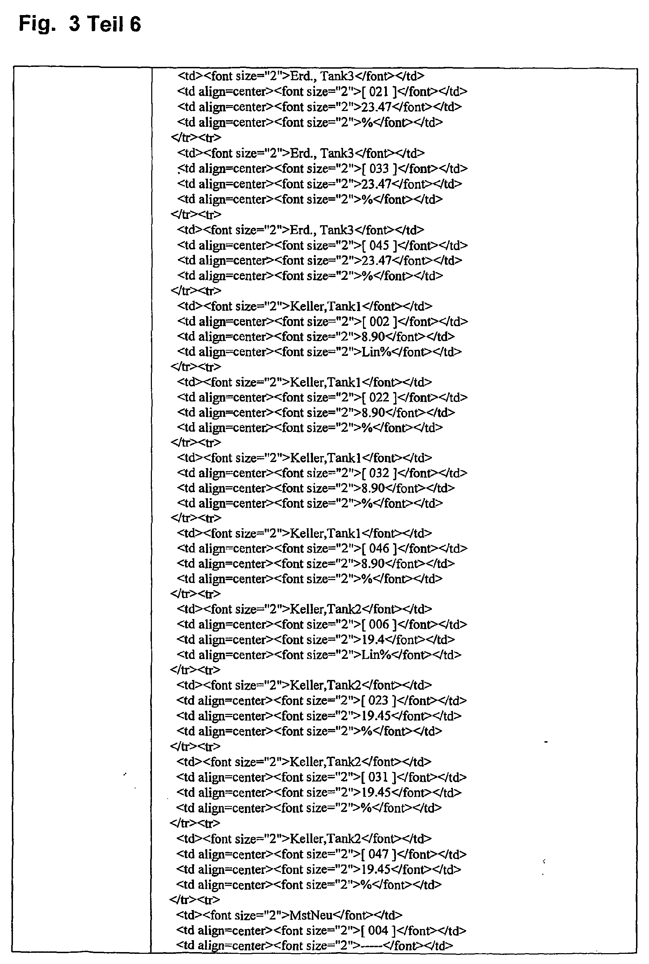

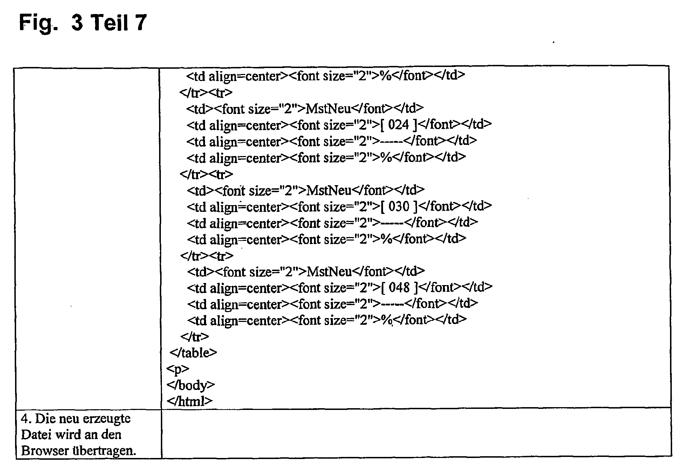

In der Fig. 3 mit den Teilen 1 bis 7 ist die in der Fig. 2 schematisch dargestellte Ausführungsform im Detail ersichtlich. So fordert gemäß Schritt 1 der Browser die Datei "messw.htm" an. Im Schritt 2 sucht der Server nach der Vorlage mit diesem Namen. Diese HTML-Vorlage beinhaltet sogenannte Schlüsselworte, wie beispielsweise ?key_current_date?, ?key_current_time? und ?key_list_tag? etc., die im Teil 1 der Fig. 3 fett gedruckt sind. Im Schritt 3 werden durch den Interpreter u.a. die zuvor genannten Schlüsselworte mit Informationen aus dem Prozessabbild ersetzt, und es wird eine neue HTML-Datei erzeugt, in der nun die aktuellen Werte beinhaltet sind. Diese neu generierte Datei, die auf der abgespeicherten HTML-Vorlage basiert, wird im Schritt 4 an den Browser übertragen.

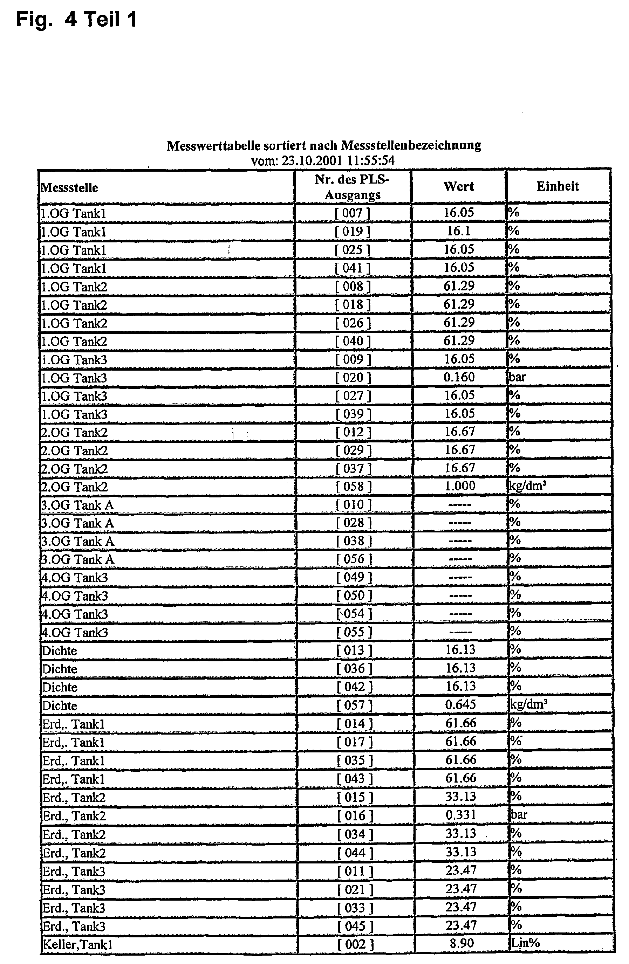

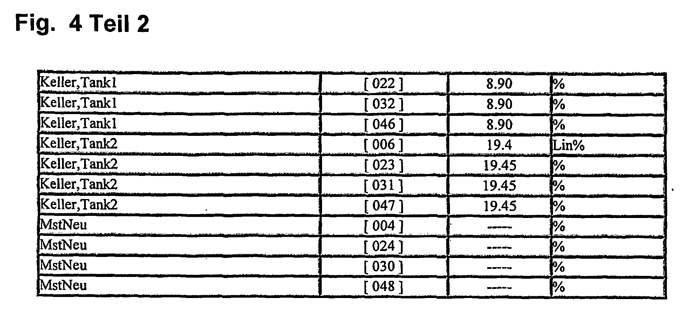

In der Fig. 4 ist nun dargestellt, wie diese Messwerttabelle gemäß der im Schritt 3 der Fig. 3 erzeugten HTML-Datei tatsächlich aussieht. Wie hieraus ersichtlich ist (Teil 1 und Teil 2), werden alle Messstellen und die aktuellen Werte dieser Messstellen angezeigt.

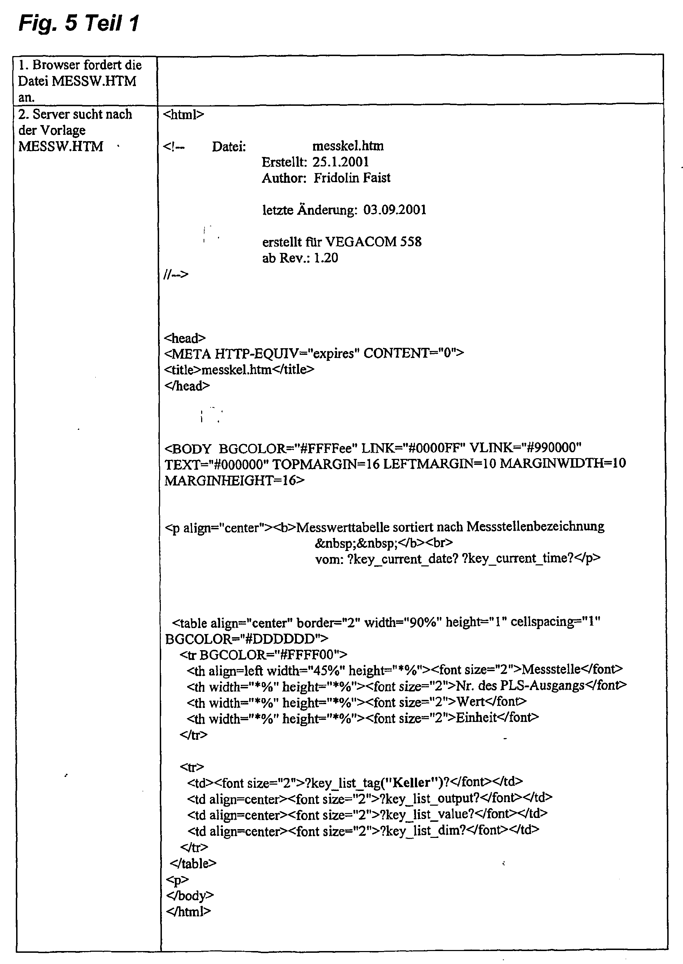

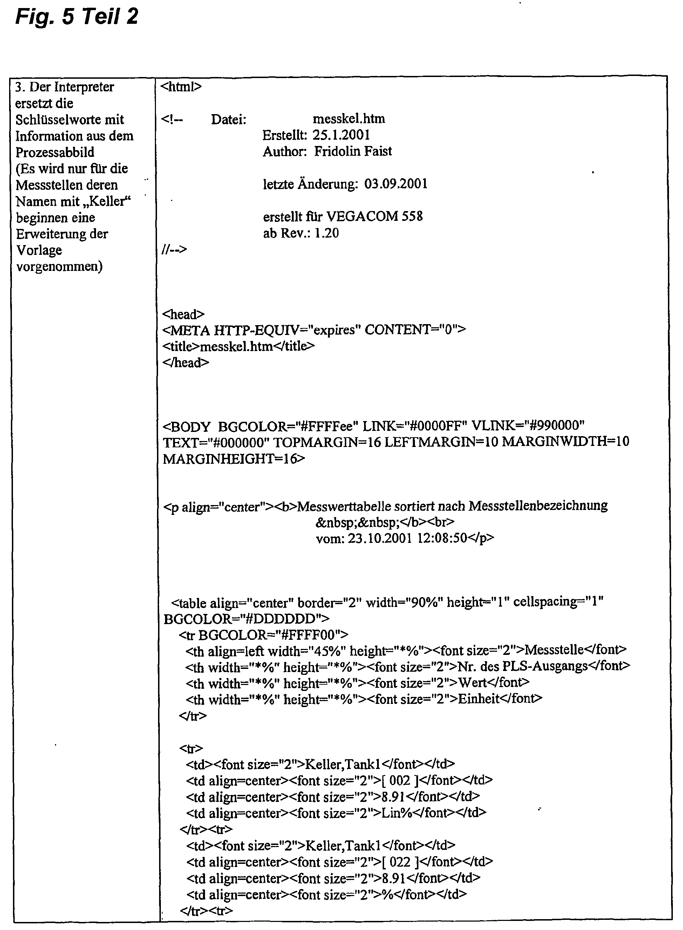

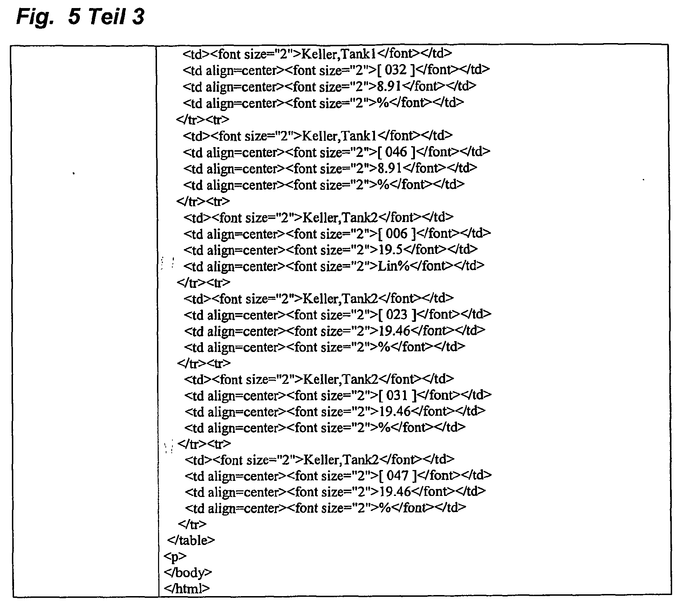

In der Fig. 5 mit den Teilen 1 und 2 ist eine Abwandlung des Verfahrens gemäß den Fig. 2 bis 4 gezeigt. Hier ist in dem Schlüsselwort ?key_list_tag? eine Bereichseinschränkung in Gestalt des Wortes "Keller" vorhanden, das für bestimmte Messstellen steht, also die in einem Keller befindlichen Messstellen repräsentiert. Im Schritt 3 wird dann aus dieser im Speicher des Web-Servers abgespeicherten HTML-Vorlage eine neue HTML-Datei erzeugt (siehe Datei gemäß Schritt 3). In dieser sind nun alle Messstellen, deren Namen mit "Keller" beginnt, enthalten.

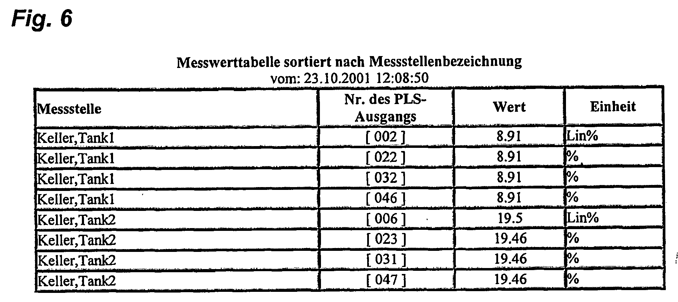

In der Fig. 6 ist gezeigt, wie die Darstellung auf dem Bildschirm dieser Keller-Messwerttabelle aussieht. Es ist hervorzuheben, dass diese Keller-HTML-Vorlage auf dem Web-Server abgespeichert sein muss. Der Vorteil dieser abgespeicherten HTML-Vorlage ist, dass nur noch für den Anwender relevante Informationen übersichtlich angezeigt werden. Hiermit ist es nun möglich, Teilinformationen gruppiert nach den verschiedensten Kriterien (z.B. Ort der Anlage, Adresse eines Gerätes oder Bezeichnung der Messstelle) für die Anzeige im Browser zu erhalten. Nachteilig ist aber, dass für jede Einschränkung eine eigene Vorlage erstellt sein muss. Das heißt, für jede Gruppe von Informationen wird eine eigene Vorlage erstellt, diese belegt den in Prozessgeräten meist nur in geringem Umfang vorhandenen Speicher und muss bei mehrsprachigen Geräten auch noch in jeder Landessprache vorgehalten werden.

Im konkreten Fall von VEGAMET-Geräten (Einzelauswertegerät mit bis zu sieben Messwerten) müssten für den Maximalausbau von 15 Geräten in drei unterschiedlichen Sprachen insgesamt 45 Vorlagen abgelegt sein. Selbst bei dem geringen Speicherbedarf von ca. 2 KByte je Vorlage führt dies zu einem Gesamtbedarf von 90 KByte. Da der auf dem Web-Server (VEGACOM 558) für Webseiten vorhandene Speicher auf 300 KByte begrenzt ist, würde mit diesem Verfahren bereits ein Drittel des Speichers nur für diese Anzeige benötigt.

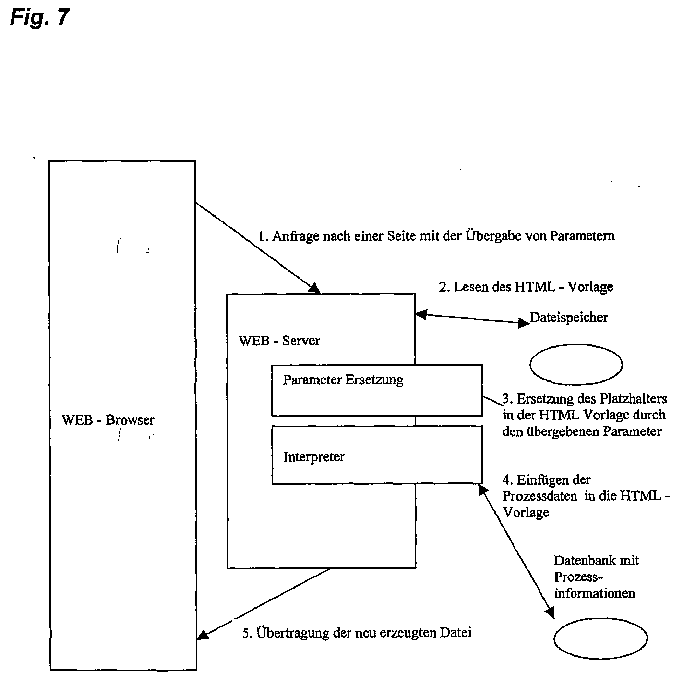

Eine ergänzte Variante der vorgenannten Verfahren ist in der Fig. 7 dargestellt. Hier wird über den Web-Browser eine Verbindung zum Web-Server hergestellt. Der Web-Browser fordert den Web-Server auf, eine bestimmte Datei zu übermitteln und übergibt gleichzeitig einen Parameter (bestehend aus Parametername und Parameterwert) zur Bestimmung des Inhalts der gewünschten Datei. Der Web-Server sucht in seinem Datenspeicher nach der entsprechenden HTML-Vorlage und ersetzt zunächst den oder die Platzhalter in der HTML-Vorlage durch den übergebenen Parameterwert. Dafür muss der Parametername mit dem Platzhalter übereinstimmen. Hiernach wird in der zuvor erläuterten Weisen der Interpreter ausgeführt, der vordefinierte Schlüsselworte aus der Vorlage mit aktuellen Werten aus der Datenbank ersetzt und eine neue HTML-Datei erzeugt. Diese neu generierte Datei wird dann an den Browser weitergeleitet.

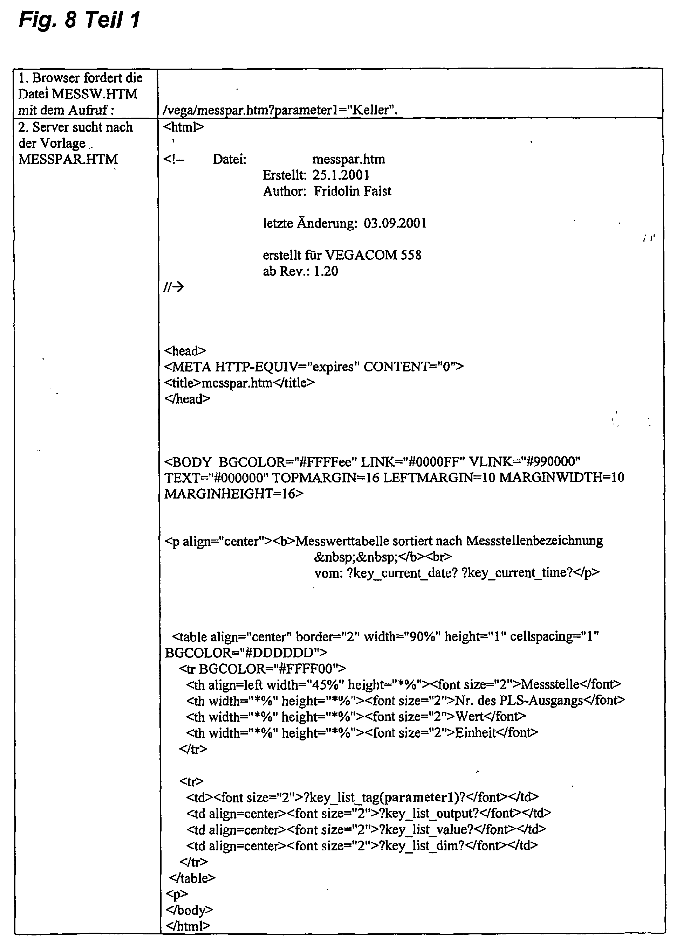

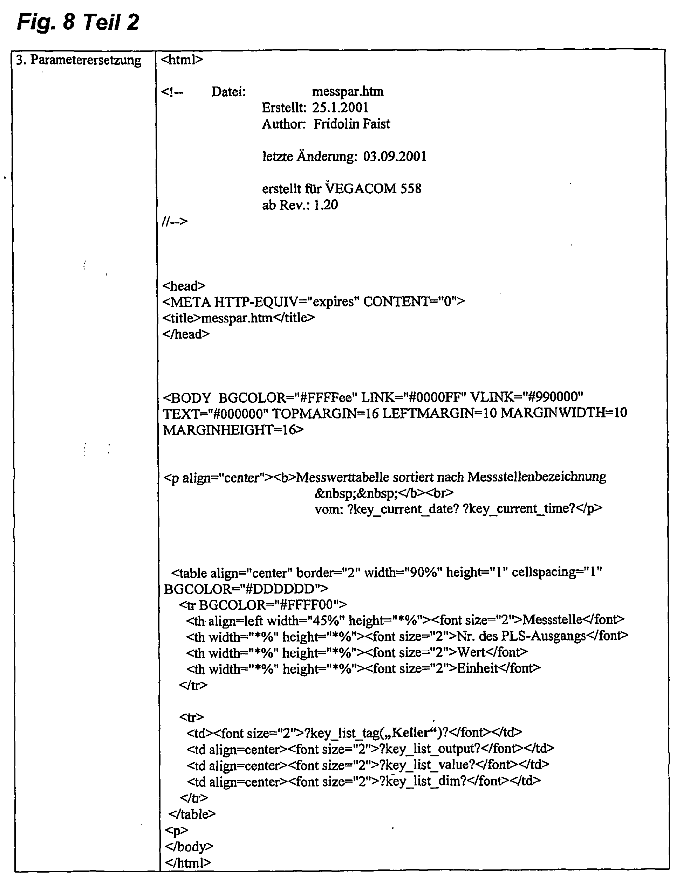

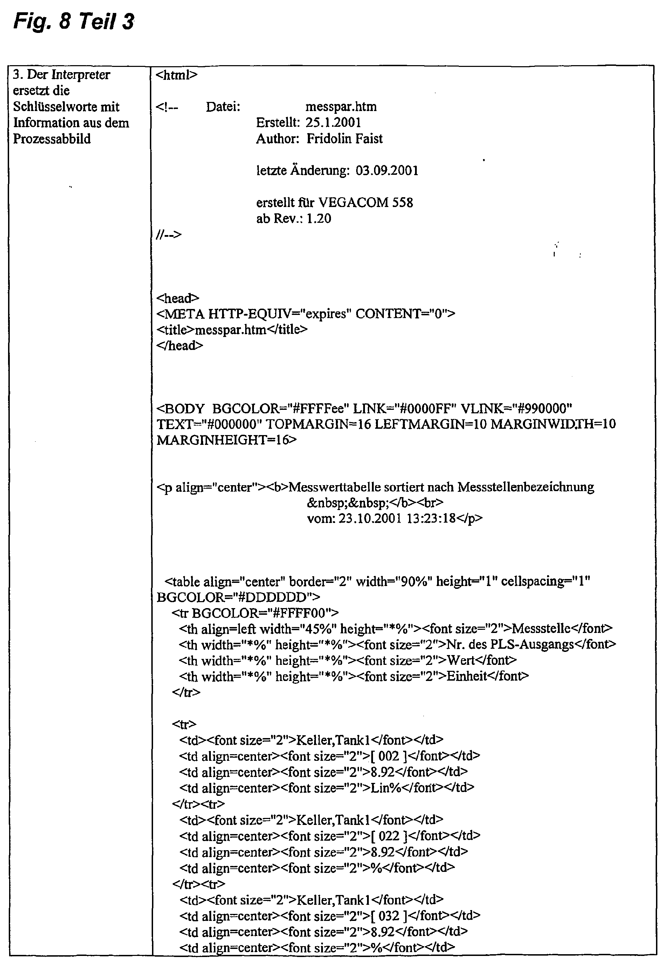

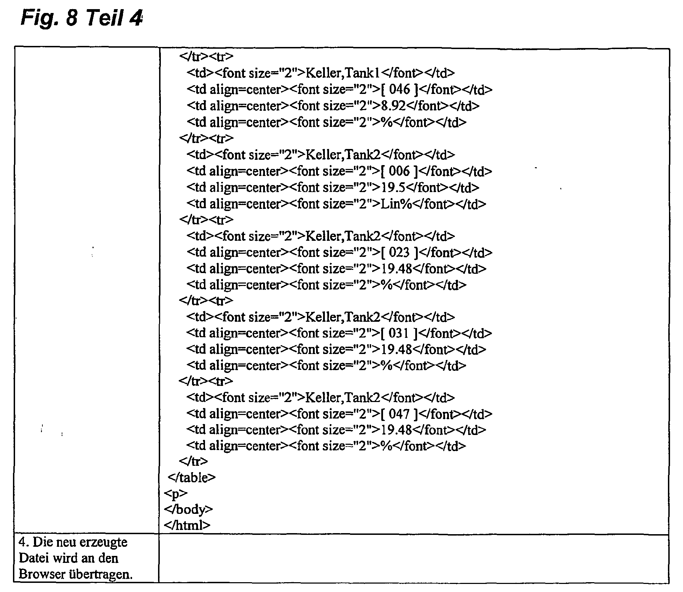

Im Detail ist dies nochmals in der Fig. 8 mit den Teilen 1 bis 4 dargestellt. Wie man hier sieht, erfolgt durch den Browser der Aufruf der Datei "messw.htm unter Zugabe des Parameters 1 ="Keller". In der abgespeicherten Vorlage ist der Platzhalter "Parameter 1" enthalten. Es erfolgt nun im Schritt 3 die Parameterersetzung, d.h. der Platzhalter "Parameter1" wird durch den entsprechenden Parameterwert "Keller" ersetzt.

Dann erfolgt mittels des Interpreters das Ersetzen der Schlüsselworte mit den Informationen aus dem Prozessabbild in der zuvor erläuterten Weise (Schritt 3). Diese neu erzeugte HTML-Datei wird an den Browser übertragen.

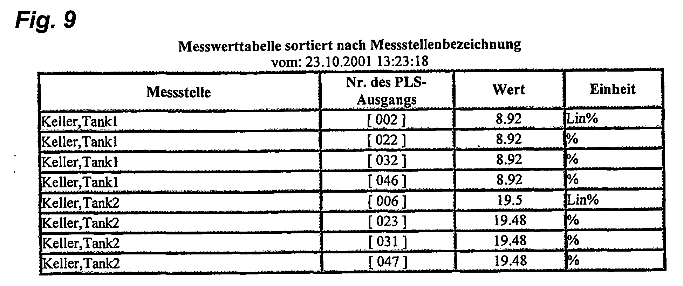

Die Darstellung auf dem Monitor dieser neu übertragenen HTML-Datei ist in der Fig. 9 gezeigt.

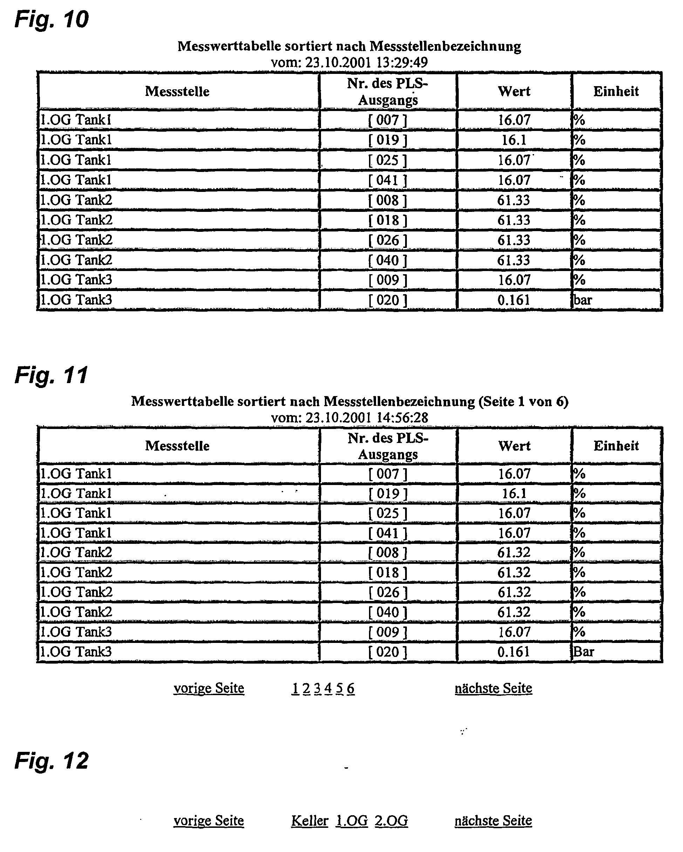

Wird nun anstatt durch die in Fig. 8 dargestellte Aufforderung des Browsers mit dem Parameterwert "Keller" als Parameter 1 der Parameterwert "1. OG" gesetzt, wird ein anderer Datensatz zur Anzeige gebracht, der jedoch auf der gleichen abgespeicherten Vorlage beruht. Die Darstellung dieses abgewandelten Datensatzes ist in der Fig. 10 gezeigt.

Es ist also möglich, durch dieses Verfahren mit Ersetzen von Platzhaltern mit nur einer einzigen hinterlegten Vorlage eine fast beliebige Anzahl von Webseiten zu erzeugen. Im oben beschrieben VEGAMET-Gerät müssten für den Maximalausbau von 15 Geräten in drei unterschiedlichen Sprachen nur noch insgesamt drei Vorlagen abgelegt sein. Dies führt dann zu einem Speicherbedarf von ca. 6 KByte. Damit wird der Speicherbedarf erheblich reduziert.

Sieht man nunmehr auch noch vor, dass in der abgespeicherten HTML-Vorlage das Schlüsselwort ?key_nav_control? eingefügt wird, so wird hiermit eine Navigationsleiste aufgebaut, die, basierend auf den aktuellen Konfigurationen des Systems, dynamisch den Aufruf der unterschiedlichen Seiten ermöglicht. Entsprechend der aktuell vorhandenen Anzahl von Messstellen wird eine Navigationsleiste mit n Seiten angeboten. Dies ist in der Fig. 11 veranschaulicht.

Auch bei dieser Vorgehensweise kann man die Navigationsleiste verändern, indem als Parameterwert für das Schlüsselwort ?key_nav_control? ein anderer Parameterwert übergeben wird, beispielsweise "Keller", "1. OG", "2. OG". Damit wird dann eine neue Navigationsleiste erzeugt, wie sie in der Fig. 12 dargestellt ist.

Es ist also auch möglich, neue Navigationsleisten auf der Basis nur einer einzigen Vorlage darzustellen, wobei diese Navigationsleisten vom Anwender bestimmbar sind.

Grundsätzlich ist ein Web-Server im Gerät vorhanden. Insbesondere ist dies ein interpretierender Web-Server. Dieser kann beispielsweise bestimmte Schlüsselworte interpretieren und bei Anforderung einer solchen Webseite durch aktuelle Werte ersetzen. Die hier genannten Schlüsselworte sollen nicht nur ein einfaches Element ersetzen, sondern bei Vorhandensein wiederkehrender Strukturen, wie beispielsweise mehrere Messstellen in prozessverarbeitenden Systemen, erkennen, wie viele dieser Strukturen vorhanden sind und entsprechend automatisch Tabellen generieren.

Beispiel: In einer HTML-Vorlage wird der Ausdruck ?key_list_tag(Par1)? in einer Tabellenstruktur verwendet und die HTML-Seite heiße messwerte.htm. Wird die Seite mit **messwerte.htm?Par1="a"-"b"** aufgerufen, so wird zunächst eine Kopie der HTML-Vorlage ins RAM geladen, mit dieser Kopie werden die weiteren Bearbeitungsschritte vollzogen. Als nächstes überprüft der geräteseitige Web-Server, ob der Ausdruck "Par1" in der HTML-Seite vorkommt. Wenn ja, so wird "Par1" durch "a"-"b" ersetzt. Nun erfolgt das Generieren der Tabelle unter Berücksichtigung der übergebenen Parameter und senden des erhaltenen Inhalts an den Webbrowser.

In HTML-Vorlagen dürfen mehrere Tabellen mit unterschiedlichen Schlüsselworten und jeweils unterschiedlichen "Platzhaltern" verwendet werden. Es dürfen auch mehrere Platzhalter innerhalb des Bereichseingrenzungsfelds verwendet werden z. B. **?key_list_tag(Par1, Par2, Par3)?.**

Der Vorteil dieser Variante ist darin zu sehen, dass nur wenige Vorlagen für beliebiege Anzahl an Darstellungsvarianten notwendig sind, Speicherplatz gespart wird, der Aufwand beim Erstellen der Webseiten (Webdesign) geringer ist, der Pflegeaufwand reduziert wird und damit insgesamt Kosten gespart werden.

Ergänzend sind nachfolgend noch nähere Einzelheiten zu den Schlüsselworten gegeben:

### Messstellenbezogene Schlüsselworte

### Einzelwerte anzeigen

| Schlüsselworte für Einzelinformationen | |
|---|---|
| ?key_tag[x]? | Anzeige des Messtellenbezeichners (TAG-Name) |
| ?key_output[x]? | Anzeige der Messtellennummer |
| ?key_value[x]? | Anzeige des Messwertes |
| ?key_dim[x]? | Anzeige der Meststelleneinheit |

Der Bezeichner [x] gibt an für welche Messstelle die Ersetzung erfolgen soll. Mögliche Werte sind hier [1] bis [255] für die Messstellennumer 1 bis 255 im VEGALÖG oder
[1.1] bis [15.7] für die VEGAMET Geräte 1 bis 15 und die dazugehörende Messstelle 1 bis 7.

### Listen anzeigen

| Schlüsselworte für Listen oder Tabellen | |
|---|---|
| ?key_list_tag? | Anzeige des Messtellenbezeichners (TAG-Name) |
| ?key_list_output? | Anzeige der Messtellennummer |
| ?key_list_value? | Anzeige des Messwertes |
| ?key_list_dim? | Anzeige der Meststelleneinheit |

Die oben genannten Schlüsselworte generieren eine Liste von allen vorhandenen Werten.
Das erste Auftreten der Schlüsselwortes ?key_list_tag? Oder ?key_list_output? Bestimmt die Sortierreihenfolge für die Tabelle (TAG-Name oder Meststellennumer).

### Bereichseingrenzung

Die Bereichseingrenzung erfolgt durch die Angabe des Bereichs in runden Klammern direkt nach dem Schlüsselwort.

| Schlüsselworte für Listen oder Tabellen | |
|---|---|
| ?key_list_tag("a"-"f", "Keller")? | Anzeige des Messtellenbezeichners (TAG-Name) |
| ?key_list_output("a"-"f", "Keller")? | Anzeige der Messtellennummer |

### Weitere Schlüsselworte

| | |
|---|---|
| ?key_serno[x]? | Seriennummer des Gerätes |
| ?key_list_serno? | Liste mit allen Seriennummem |
| | |
| ?key_type[x]? | Gerätetyp |
| ?key_list type? | Liste mit allen Gerätetypen |
| | |
| ?key_version[x]? | Geräteversion |
| ?key_list_version? | Liste mit allen Geräteversionen |

### Allgemeine Schlüsselworte

| | |
|---|---|
| ?key_current_date? | Aktuelles Datum |
| ?key_current_time? | Aktuelle Uhrzeit |

### Allgemeine Beschreibung "Interpreter"

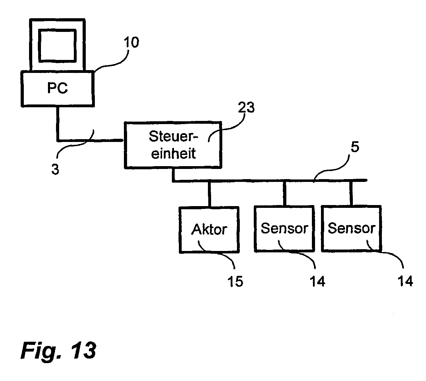

Ein hier zur Anwendung kommendes System, wie beispielsweise in Fig. 13 gezeigt, umfasst einen PC 10, der über eine Schnittstelle 3 mit einem internetfähigen Gerät 23 (z. B. einer kleinen SPS, Steuereinheit) verbunden ist. Das System umfasst weiterhin eine Mehrzahl von Sensoren 14 sowie Aktuatoren 15, die über ein Bussystem 5 mit dem internetfähigen Gerät 23 in beiden Richtungen kommunizieren. Die Schnittstelle 3 ist eine Punkt-zu-Punkt Verbindung und somit nicht busfähig. Die Schnittstelle 3 ist üblicherweise die Parametrierschnittstelle für herstellerspezifische Programmierwerkzeuge. Das erfindungsgemäße Verfahren kann in dem Gerät 23 implementiert sein.

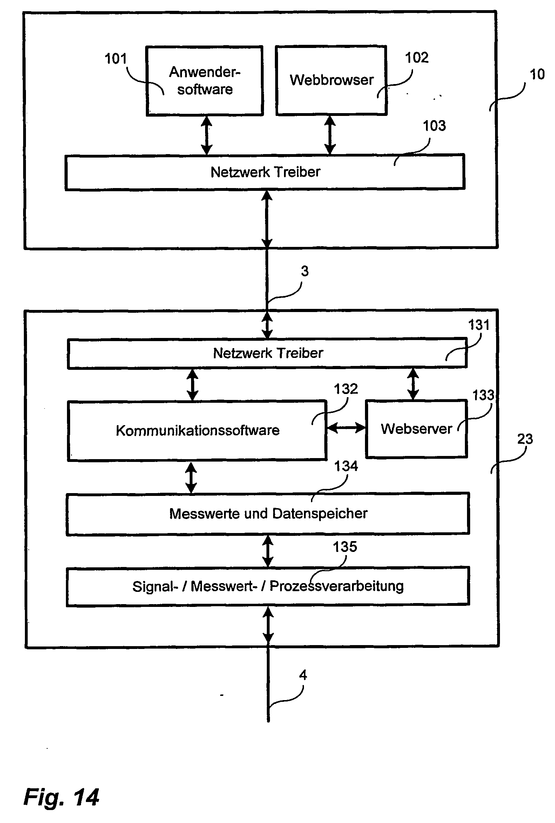

Die Fig. 14 zeigt die in diesem Zusammenhang wesentlichen Komponenten des PCs 10 sowie des Gerätes 23 in dem Fall, in dem das Gerät 23 mit einer Webserverfunktionalität gemäß dem Stand der Technik ausgestattet ist, d. h. einen auf "hart-codierten" Webseiten basierenden Internetbrowser aufweist.

Der PC 10 beinhaltet demnach eine Anwendersoftware 101 sowie einen Webbrowser 102, die über einen ersten Netzwerk-Treiber 103 mit der Schnittstelle 3 verbunden sind. Auf Seiten des Gerätes 23 befindet sich ein zweiter Netzwerk-Treiber 131, der an die Schnittstelle 3 angeschlossen ist. Mit dem zweiten Netzwerk-Treiber 131 ist eine Kommunikationssoftware 132 und ein Webserver 133 verbunden, die auch untereinander kommunizieren. Die über das Bussystem 4 zu und von den Sensoren 14 sowie Aktuatoren 15 übertragenen Signale werden über eine Einheit 135 für Signal-, Messwert- und Prozessverarbeitung geführt. Diese Einheit ist wiederum mit einem Speicher 134 für Messwerte und Daten verbunden, auf den die Kommunikationssoftware 132 zugreift. Über sämtliche dieser Verbindungen in dem PC 10 sowie dem Gerät 23 können die Daten in beiden Richtungen übertragen werden.

Nachteilig hierbei ist jedoch, wie eingangs erwähnt wurde, dass der Aufbau der auf diese Weise abrufbaren Web-Seiten fest in den Geräten hinterlegt ist und nur einige Informationen, die den Status der Geräte wiedergeben, beim Aufruf der Seiten dynamisch eingefügt werden können.

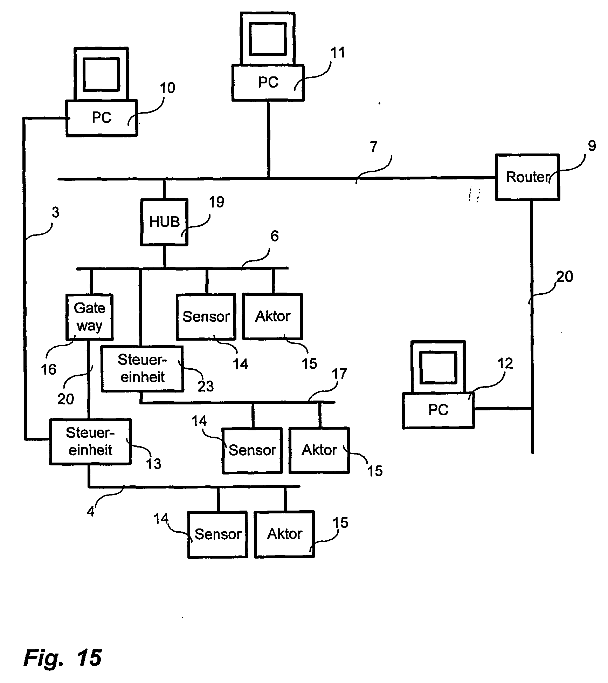

Die Fig. 15 zeigt demgegenüber eine schematische Darstellung einer ersten erfindungsgemäßen Ausführungsform eines prozessverarbeitenden Systems. Das System umfasst einen ersten PC 10, einen zweiten PC 11 sowie einen dritten PC 12, die sich an geographisch beliebigen Orten befinden können. Der erste PC 10 ist dabei über eine Schnittstelle 3 mit einer ersten Steuereinheit 13 verbunden, die zum Beispiel eine SPS, eine PLS, eine Remote I/O-Einheit oder eine intelligente Busklemme sein kann. Die erste Steuereinheit 13 ist über einen ersten Feldbus 21 in der Prozessebene (z. B. ProfibusDP, Interbus, usw. oder proprietäre Lösung) mit einem Gateway 16 verbunden, über das eine Verbindung zu einem ersten lokalen Netzwerk 6 (LAN - local area network) hergestellt werden kann, bei dem es sich um ein Bussystem auf Automatisierungsebene (z. B. Ethernet, Token Ring usw.) handelt.

Die erste Steuereinheit ist weiterhin über einen zweiten Bus 4 mit einer Mehrzahl von Sensoren 14 sowie Aktuatoren 15 verbunden. Der zweite Bus 4, bei dem es sich um Steuerleitungen handelt, die optional auch bidirektionale Signale führen können, kann ein Feldbus in der Feldebene (z. B. ASI) sein und Analogein- und Ausgänge mit 4 bis 20 mA sowie Schaltein- und Ausgänge umfassen.

Über das erste lokale Netzwerk 6 kann eine Kommunikation mit weiteren Sensoren 14 und Aktuatoren 15 sowie einer weiter entfernt angeordneten zweiten Steuereinheit 23 (zum Beispiel eine SPS, eine PLS, eine Remote I/O-Einheit oder eine intelligente Busklemme) erfolgen, die über einen dritten Feldbus 5 in der Feldebene (z. B. ProfibusPA, FieldbusFoundation usw. oder proprietäre Lösung) mit weiteren Sensoren 14 und Aktuatoren 15 verbunden ist.

Der zweite PC 11 ist bei diesem System über ein zweites lokales Netzwerk (LAN) 7 angeschlossen. Dieses zweite Netzwerk 7 ist über einen Router 9 mit einem dritten überregionalen Netzwerk (WAN - wide area network) 20 verbunden, an das der dritte PC 12 angeschaltet ist. Das zweite Netzwerk 7 ist außerdem über einen HUB 19 mit dem ersten lokalen Netzwerk 6 verbunden.

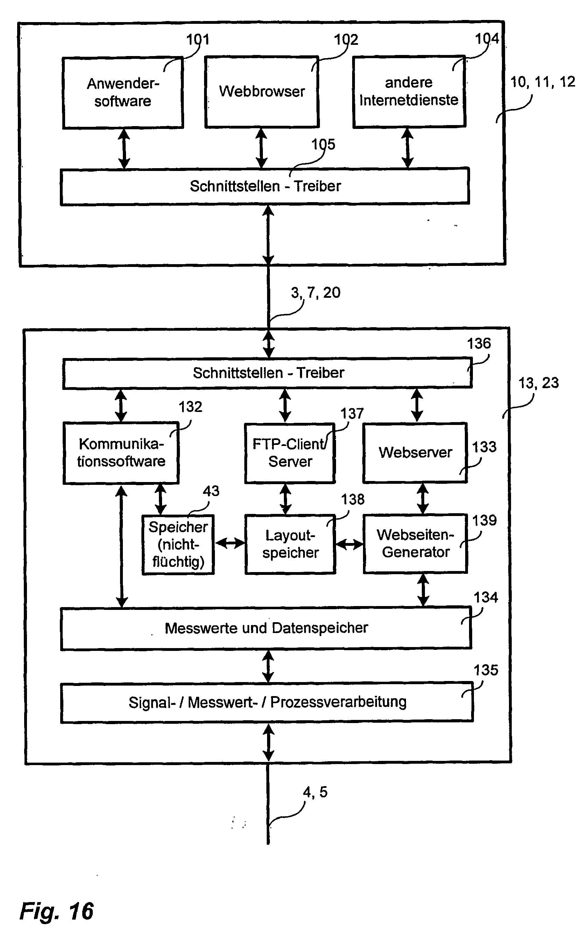

Die in diesem Zusammenhang wesentlichen Komponenten des ersten, zweiten und dritten PC 10, 11, 12 sowie der ersten und zweiten Steuereinheit 13, 23 sind in Figur 16 gezeigt.

Die PCs umfassen jeweils eine Anwender-Software 101, einen Webbrowser 102 sowie andere Internetdienste 104, die zur bidirektionalen Kommunikation mit einem ersten Schnittstellen-Treiber 105 verbunden sind. Dieser erste Schnittstellen-Treiber 105 stellt eine Verbindung nach außen über die Schnittstelle 3, über das zweite lokale Netzwerk 7 bzw. über das überregionale Netzwerk 20 her.

Die erste und zweite Steuereinheit 13, 23 umfasst jeweils am Eingang einen zweiten Schnittstellen-Treiber 136, der über die Schnittstelle 3 mit dem ersten PC 10 bzw. über das erste lokale Netzwerk 6, den HUB 19 und das zweite lokale Netzwerk 7 mit dem zweiten PC 11 und weiter über den Router 9 und das dritte überregionale Netzwerk 20 mit dem dritten PC 12 verbunden ist.

Der zweite Schnittstellen-Treiber 136 ist innerhalb der Steuereinheit jeweils bidirektional mit einer Kommunikationssoftware 132, einem Internetserver 133 sowie einem FTP-Client / Server 137 verbunden. Die Steuereinheit umfasst weiterhin einen Speicher 134 für Messwerte und Daten, der bidirektional mit der Kommunikationssoftware 132 sowie einer Verarbeitungseinheit 135 für Signale,

Messwerte und Prozesse komuniziert. Die Einheit 135 ist mit dem zweiten bzw. dritten Bus 4, 5 verbunden, der eine bidirektionale Kommunikation mit den Sensoren 14 und den Aktuatoren 15 ermöglicht.

Die Steuereinheit 13, 23 umfasst weiterhin einen Intemetseiten-Generator 139, der beliebige Layouts (Vorlagen) mit aktuellen Werten versehen kann und jeweils bidirektional mit dem Internetserver 133, dem Speicher 134 für Messwerte und Daten, sowie einem Speicher 138 für beliebige Layouts von Internetseiten verbunden ist. Der Speicher 138 ist bidirektional mit dem FTP-Client / Server 137 sowie einem nichtflüchtigen Speicher 43 verbunden, der auch zum Hinterlegen von beliebigen Layouts genutzt wird und seinerseits eine bidirektionale Verbindung mit der Kommunikationssoftware 132 aufweist.

Die von dem Generator 139 erzeugten Internetseiten werden dem Webserver 133 zugeführt, der mit dem zweiten Schnittstellen-Treiber 136 verbunden ist. Der Speicher 138 speichert dabei nicht nur Vorlagen und Layouts, sondern verwaltet diese auch in einer RAMDISK, in der das gleiche Format verwendet wird, wie in einer RAMDISK oder einer Festplatte der PCs. Dadurch wird das Kopieren, Löschen, Verschieben und Erzeugen von Dateien und Ordnern mit den Werkzeugen, die nach dem Stand der Technik im PC-Bereich allgemein verwendet werden, sehr einfach.

Alle Verbindungen innerhalb der PCs 10, 11, 12 sowie der Steuereinheiten 13, 23 ermöglichen eine bidirektionale Kommunikation zwischen den verbundenen Einheiten.

Bei dieser Ausführungsform sind die Sensoren 14, Aktuatoren 15 und Steuereinheiten 13, 23 digital kommunizierende Geräte, die über die genannten Netzwerke 7, 20 (LAN, WAN) bzw. Router 9 miteinander verbunden sind, so dass sie sich an beliebigen Orten befinden können. Die Geräte bilden prozessverarbeitende, vernetzte Systeme, die Internetprotokolle und Internetdienste unterstützen und den nichtflüchtigen Speicher 43 aufweisen, in dem einfache HTML-Dateien und Grafiken zur Laufzeit abgelegt werden können.

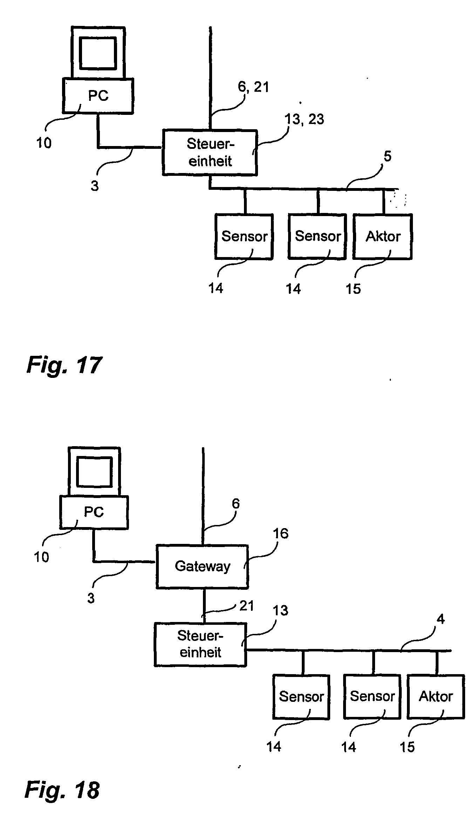

Die Fig. 17 zeigt schematisch einen Teil einer zweiten erfindungsgemäßen Ausführungsform eines prozessverarbeitenden Systems. Im Unterschied zur ersten Ausführungsform sind hierbei die erste und zweite Steuereinheit 13, 23 zusammengefasst und gemeinsam über die Schnittstelle 3 mit dem ersten PC 10 verbunden. Weiterhin kommunizieren die beiden Steuereinheiten gemeinsam über das erste lokale Netzwerk 6 sowie den ersten Feldbus 21 mit den in Figur 3 gezeigten Komponenten und sind über den dritten Feldbus 5 mit den Sensoren 14 und den Aktuatoren 15 verbunden.

Die Fig. 18 zeigt schematisch einen Teil einer dritten erfindungsgemäßen Ausführungsform eines prozessverarbeitenden Systems. Hierbei ist im Unterschied zur ersten Ausführungsform das Gateway 16 direkt über die Schnittstelle 3 mit dem ersten PC 10 verbunden. An das Gateway 16 schließt sich wiederum das erste lokale Netzwerk 6 sowie der erste Feldbus 21 an, der mit der ersten Steuereinheit 13 verbunden ist. Diese kommuniziert wiederum über den zweiten Bus 4 mit Sensoren 14 und Aktuatoren 15.

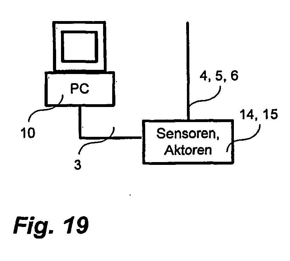

Bei dem in Fig. 19 schematisch gezeigten Teil einer vierten erfindungsgemäßen Ausführungsform ist schließlich der erste PC 10 über die Schnittstelle 3 direkt mit Sensoren 14 und Aktuatoren 15 verbunden. Diese kommunizieren wiederum wie bei der ersten Ausführungsform gemäß Figur 15 über den zweiten Bus 4, den dritten Feldbus 5 sowie das erste lokale Netzwerk 6 mit den betreffenden Komponenten.

Der Aufbau, die Gestaltung und die Strukturierung dieser Seiten kann durch einen Betreiber des Systems auf einem der PCs beliebig vorgenommen werden und wird individuell vor oder während des laufenden Betriebes des Systems in die einzelnen Geräte übertragen. Bestimmte Stellen auf diesen Seiten, die Statusinformationen über Prozessvariable oder Prozessparameter enthalten sollen, können gemäß einem von mehreren Aspekten der Erfindung nun - wie bereits zuvor beschrieben - über definierte Schlüsselworte markiert werden. Der Betreiber des Systems hat somit die Möglichkeit, durch Auswahl geeigneter Grafikelemente eine Schnittstelle zu seinen Geräten zu schaffen, die zum Beispiel bestimmten firmeninternen Darstellungsformen entsprechen. Außerdem kann er den Inhalt der Seiten so beeinflussen, dass nur die für ihn interessanten Inhalte erscheinen. Die auf diese Weise erstellten kundenspezifischen Dateien können mit den üblichen Internetdiensten (FTP-Transfer) über die beschriebenen Netzwerke (LAN, WAN) und Bussysteme oder über eine beliebige andere, an dem Gerät vorhandene Schnittstelle in die Geräte übertragen werden, in denen sie dann nichtflüchtig gespeichert werden.

Sofern die Geräte in den dafür vorgesehenen Speicherbereichen Inhalte finden, werden diese Inhalte automatisch interpretiert und mit dem Webseiten-Generator 139 in neue HTML-Seiten umgewandelt, die genau die Darstellungsformen der Vorlagen berücksichtigen. Gegebenenfalls werden die Schlüsselworte in den neu erzeugten HTML-Seiten durch entsprechende aktuelle Informationen ersetzt. Tabellarisch oder als Listen aufgebaute Konstrukte zum Beispiel zur Anzeige von Prozessvariablen müssen somit in der Vorlage nur einmal angelegt werden. Die betreffenden Geräte erweitern diese Konstrukte gegebenenfalls automatisch um die Anzahl der vorhandenen Prozessvariablen.

Zusätzlich zu dem Layout für eine Nachricht können zweite Layouts abgelegt werden, die reine Listen oder Tabellenkonstrukte enthalten. Diese zweiten Layouts verwenden einfache Dateiformate, die direkt zur Weiterverarbeitung in prozessverarbeitenden Systemen geeignet sind und werden der Nachricht in Form eines Anhangs angefügt.

Die auf diese Weise konfigurierten Geräte ermöglichen es dem Anwender mit einfachen und allgemein vorhandenen Mitteln auf kostengünstige Weise und unter Verwendung der HTML-Seiten als Layout, eigene Darstellungsformen für Informationsseiten oder Bedienelemente zu realisieren, die über einen üblichen Webbrowser abgerufen werden können. Die hier genannten Informationsseiten können sowohl Informationen über das System selbst, wie auch Angaben über den Betriebszustand sowie Messwerte der Prozessvariablen beinhalten. Die auf diese Weise konfigurierten Geräte des Systems bieten die Möglichkeit, über den gesamten Lebenszyklus des Systems hinweg eine ständige Anpassung an neue Gegebenheiten vorzunehmen.

Um Probleme zu verhindern, die durch ein Abspeichern von fehlerhaften HTML-Seiten in den Geräten möglicherweise auftreten können, werden diese Geräte mit vorgefertigten Seiten ausgeliefert, die vom Betreiber des Systems nicht manipuliert werden können. In Abhängigkeit davon, mit welcher URL (Uniform Resource Locator) -Adresse der Benutzer des Systems beim Aufruf des Webbrowsers die Geräte adressiert, wird im Gerät wahlweise zwischen der Wiedergabe der Seiten, die mit den Geräten ausgeliefert wurden, und den kundenspezifischen Seiten umgeschaltet. Der Benutzer darf jedoch auch eine Vielzahl unterschiedlicher Sites anlegen. D. h. es kann über eine Vielzahl unterschiedlicher URL's jeweils unterschiedlicher Informationsgehalt angefordert werden.

Damit wird sichergestellt, dass zu jedem Zeitpunkt die im Gerät bereitgestellten Informationen abgerufen werden können.

Dieses Verfahren, mit dem Internet-Seiten von Geräten in prozessverarbeitenden Systemen zur Laufzeit individuell verändert werden können, kann auch auf andere Internetdienste übertragen werden. So können in diesen Geräten zum Beispiel auch Vorlagen für Faxschreiben oder E-Mails gespeichert werden, die in Abhängigkeit von der Konfiguration erst beim Eintreten bestimmter Ereignisse abgesetzt werden. Solche Ereignisse können zum Beispiel das Überschreiten bestimmter Messwerte, das Erzeugen von Störmeldungen in dem System oder das Erreichen bestimmter Prozesszustände sein. Für die genannten Fax- oder E-Mail-Vorlagen gilt wiederum, dass sie mit Schlüsselworten versehen werden können, die durch das Gerät beim Absenden der Vorlagen durch aktuelle Werte ersetzt werden.

Für bestimmte Anwendungen ist es zum Beispiel interessant, den E-Mails bestimmte Dateien anzuhängen, die in den Geräten selbst erzeugt werden. Diese Dateien können zum Beispiel reine ASCII-Dateien sein, die in tabellarischer Form Messwertprotokolle des Systems beinhalten. Einer der Vorteile der Übertragung per E-Mail besteht darin, dass solche Nachrichten ohne eine Genehmigung eines Netzwerkadministrators jedem Adressaten zugestellt werden können.

Eine weitere Möglichkeit besteht darin, Daten zu bestimmten Zeiten automatisch an bestimmte Server, zum Beispiel Prozessrechner zu versenden. Für diesen Dienst ist vorzugsweise in den hier beschriebenen Geräten ein FTP-Client realisiert. Dieser FTP-Client kann anhand der im Gerät gespeicherten Konfigurationen eigenständig eine FTP-Verbindung zu einem Server (Prozessrechner) herstellen, anschließend die Dateien übertragen und die Verbindung schließlich wieder abbauen.

Eine weitere Anwendung der Erfindung stellt die flexible Anpassung einer Bedienoberfläche für die beschriebenen Geräte dar. Anstelle der bisher genannten Informationsseiten können auch Prozessvariable über das HTTP verändert werden. Ferner können für die individuelle Gestaltung der Web-Seite dieser Geräte nicht nur reine HTML-Tags, sondern auch JAVA-Scripte und CGI's (Common Gateway Interface) eingesetzt werden.

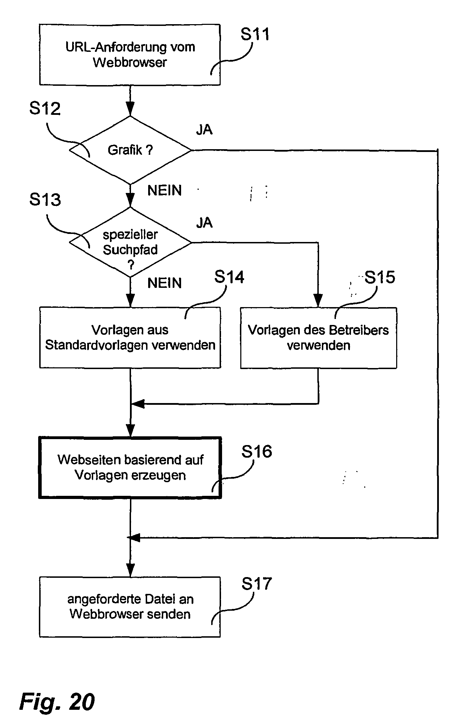

Beispielhaft soll nun anhand des Flussdiagramms in Figur 20 der Ablauf erläutert werden, der zur Selektion eines Zugriffspfades für Vorlagen bei Benutzereingaben über einen Internetbrowser stattfindet.

In einem Schritt S11 wird durch den Internetbrowser über eine Intemetadresse (URL) eine Datei angefordert. In einem Schritt S12 wird dann abgefragt, ob die angeforderte Datei eine Grafik ist. Wenn dies nicht der Fall ist und wenn gemäß der Abfrage in Schritt S 13 auch kein spezieller Suchpfad angegeben ist, werden gemäss Schritt S 14 die Vorlagen aus den Standardvorlagen verwendet und die Internetseiten gemäss Schritt S 16 basierend auf diesen Vorlagen erzeugt. Anschließend wird dann gemäß Schritt S 17 die erzeugte und angeforderte Datei an den die Anforderung übermittelnden Internetbrowser gesendet.

Wenn gemäß der Abfrage in Schritt S 12 eine Graphik angefordert wird, so wird diese unmittelbar gemäß Schritt S17 an den Internetbrowser übermittelt. Wenn gemäß der Abfrage in Schritt S 13 ein spezieller Suchpfad angegeben ist, werden gemäß Schritt S 15 Vorlagen des Benutzers verwendet und auf deren Grundlage die Internetseiten gemäß Schritt S 16 erzeugt und gemäß Schritt S 17 übermittelt.

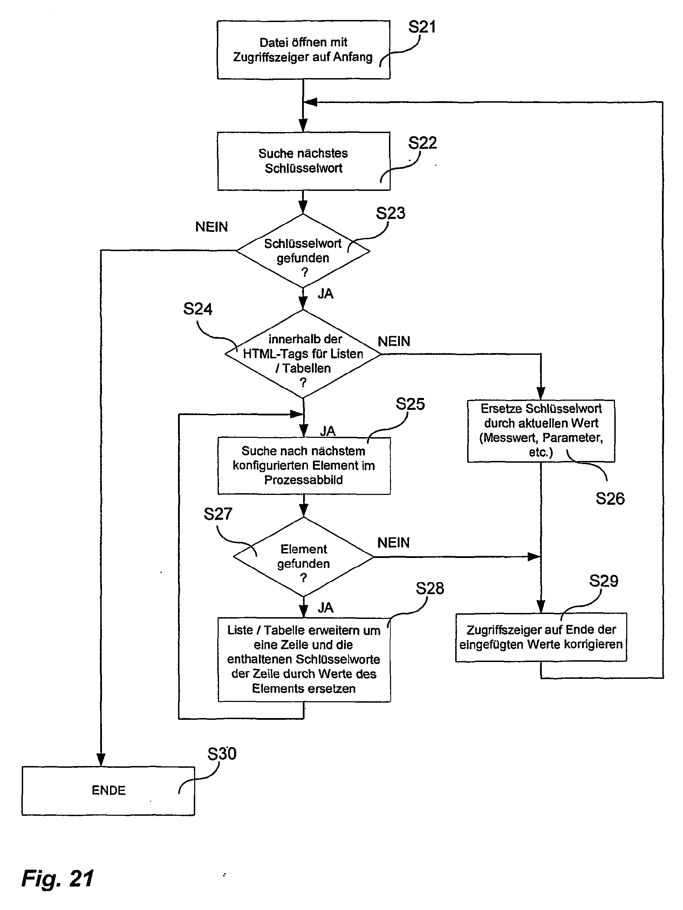

Die Fig. 21 zeigt ein Flussdiagramm der Erzeugung von Webseiten auf der Basis von Vorlagen, wobei Schlüsselwörter ersetzt und Listen bzw. Tabellen in Abhängigkeit von vorhandenen Prozessabbildern bzw. einer Gerätekonfiguration dynamisch erweitert werden. Die Fig. 21 zeigt auch die grundsätzlichen Abläufe beim Erzeugen vom Ereignismeldungen, E-Mails und Messwertprotokollen, wobei für Tabellenkonstrukte in deren Vorlagen ebenfalls die Syntax für HTML-Seiten Verwendung findet.

In einem Schritt S21 wird zunächst die betreffende Datei geöffnet, wobei der Zugriffszeiger auf "Anfang" gestellt ist. Gemäß Schritt S22 wird dann ein nächstes Schlüsselwort gesucht. Wenn gemäß der Abfrage in Schritt S23 ein Schlüsselwort gefunden wurde, wird gemäß Schritt S24 abgefragt, ob dieses innerhalb der HTML-Tags für Listen bzw. Tabellen liegt. Wenn dies der Fall ist, wird gemäß Schritt S25 nach einem nächsten konfigurierten Element in dem Prozessabbild gesucht. Wenn gemäß der Abfrage in Schritt S27 ein solches Element gefunden wurde, wird gemäß Schritt S28 die Liste bzw. die Tabelle um eine Zeile erweitert, und die enthaltenden Schlüsselworte der Zeile durch Werte des Elementes ersetzt. Anschließend wird dieser Vorgang durch Rücksprung zu Schritt S25 wiederholt.

Wenn bei der Suche nach einem nächsten konfigurierten Element in dem Prozessabbild gemäß Schritt S25 und der Abfrage gemäß Schritt S27 kein Element mehr gefunden wird, wird gemäß Schritt S29 der Zugriffszeiger auf "Ende" der eingefügten Werte korrigiert und der Ablauf durch Rücksprung zu Schritt S22 (Suche eines nächsten Schlüsselwortes) wiederholt.

Wenn gemäss Schritt S23 ein Schlüsselwort nicht gefunden wird, wird der Ablauf gemäss Schritt S30 beendet. Wenn zwar ein Schlüsselwort gefunden wird, dieses jedoch gemäß der Abfrage in Schritt S24 nicht innerhalb der HTML-Tags für Listen bzw. Tabellen liegt, wird gemäss Schritt S26 das Schlüsselwort durch einen aktuellen Wert wie zum Beispiel einen Messwert, einen Parameter usw. ersetzt und anschließend mit Schritt S29 (Zugriffszeiger auf "Ende" der eingefügten Werte korrigieren) fortgefahren, um schließlich den Ablauf mit Schritt S22 und der Suche nach einem nächsten Schlüsselwort zu wiederholen.

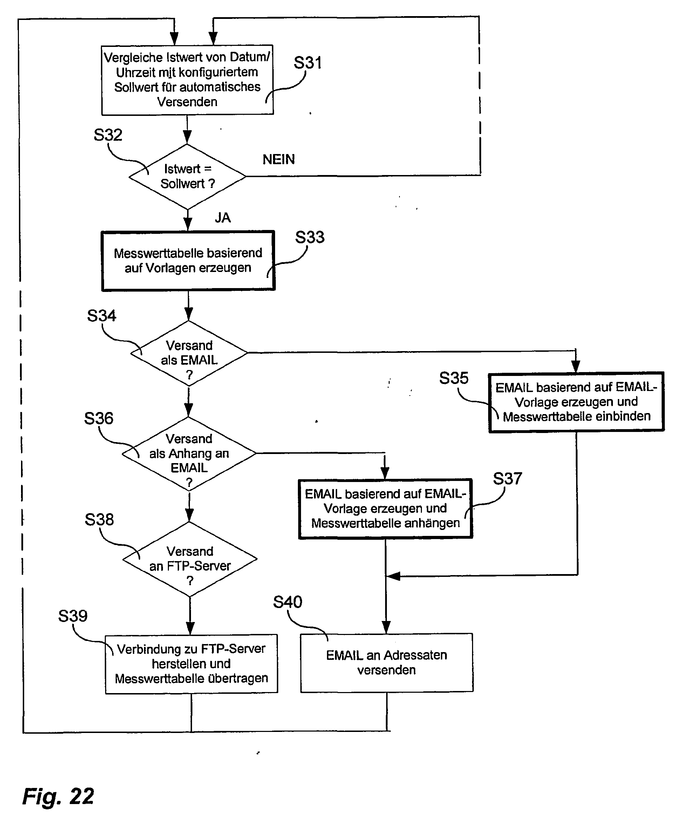

Die Fig. 22 zeigt schließlich ein Flussdiagramm des Versendens von Informationen nach vorkonfigurierten Zeitkriterien, das heißt nach festen Zeitintervallen oder programmierbaren Terminen. Zu diesem Zweck wird zunächst gemäß Schritt S31 der Istwert des Datums und der Uhrzeit mit entsprechenden konfigurierten Sollwerten für ein automatisches Versenden verglichen. Wenn gemäß der Abfrage in Schritt S32 der Istwert gleichen dem Sollwert ist, so wird gemäß Schritt S33 eine Messwerttabelle basierend auf Vorlagen erzeugt. Anschließend wird gemäß Schritt S34 abgefragt, ob der Versand als E-Mail erfolgen soll. Wenn dies der Fall ist, wird gemäß Schritt S35 eine E-Mail auf der Basis von E-Mail-Vorlagen erzeugt und die Messwerttabelle entsprechend eingebunden. Im Anschluss daran wird die E-Mail gemäß Schritt S40 an den Adressaten versendet und der Ablauf durch Rücksprung zu Schritt S31 wiederholt.

Wenn die Abfrage gemäß Schritt S34 mit "Nein" beantwortet wird, wird gemäß Schritt S36 abgefragt, ob der Versand als Anhang zu einer E-Mail erfolgen soll. Wenn dies der Fall ist, wird eine E-Mail basierend auf E-Mail-Vorlagen erzeugt und die Messewerttabelle als Anhang angehängt. Anschließend wird die E-Mail gemäß Schritt S40 an den Adressaten versendet und der Ablauf durch Rücksprung zu Schritt S31 wiederholt. Wenn die Abfrage gemäß Schritt S36 mit "Nein" beantwortet wird, wird gemäß Schritt S38 abgefragt, ob der Versand an einen FTP-Server erfolgen soll. Wenn diese Abfrage mit "Ja" beantwortet wird, wird gemäß Schritt S39 eine Verbindung zu dem betreffenden FTP-Server hergestellt und die Messwerttabelle übertragen. Anschließend kann der Ablauf durch Rücksprung zu Schritt S31 wiederholt werden.

Auch wenn in der obigen Beschreibung der Schwerpunkt für Zugriffsmöglichkeiten im wesentlichen auf dem Einsatz der PCs beruht, die über eines der genannten Netzwerke über Internetdienste kommunizieren bzw. Daten austauschen, ist jedoch das Vorhandensein eines solchen Netzwerkes keinesfalls notwendig. Der Datenaustausch mit den PCs kann vielmehr auch über jede andere Schnittstelle direkt zwischen den Prozessgeräten (d.h. Sensoren, Aktuatoren, Gateways, Steuereinheiten) und den PCs vorgenommen werden. Weiterhin können die PCs auch an Bussysteme angeschlossen sein, über die nicht typischerweise Internetprotokolle übertragen werden.

## Patentansprüche

1. Webseiten-Vorlage,
- die auf einem Prozessgerät mit geräteseitigem Web-Server abgespeichert ist, das aus der Gruppe bestehend aus Füllstandmessgerät, Druckmessgerät, Endschalter, Feldgerät, Sensor (14), Aktuator (15), Durchflussmessgerät und Schnittstellenwandler (13, 23) ausgewählt ist,
- die in einer Seitenbeschreibungssprache definiert ist,
- die auf einem Web-Server abspeicherbar ist und
- die zumindest einen Platzhalter und ein Schlüsselwort enthält,
wobei der Platzhalter durch einen Parameter zu ersetzen ist und der Parameter zusammen mit einer Anforderung der auf der Vorlage basierenden Webseite mit Hilfe eines Web-Browsers mitgesandt wird und von einem Anwender bestimmbar ist, und
wobei das Schlüsselwort durch Daten aus einem Prozessabbild zu ersetzen ist, wodurch mit nur einer abgespeicherten Vorlage an die Bedürfnisse des Anwenders angepasste unterschiedliche Darstellungen von auf der aufgerufenen Vorlage basierenden Webseiten mit aktuellen Daten erzeugbar sind.

2. Webseiten-Vorlage nach Anspruch 1,
wobei in der Vorlage mehrere unterschiedliche Platzhalter vorhanden sind und ein Parameter einen Parameternamen und einen zugehörigen Parameterwert umfasst, und überall dort, wo in der vom Web-Browser angeforderten Vorlage der Platzhalter mit dem Parameternamen identisch ist, der Platzhalter durch den zu dem entsprechenden Parameternamen zugehörigen Parameterwert zu ersetzen ist, und wobei mehrere Schlüsselworte vorhanden sind, die durch aktuelle Prozessdaten zu ersetzen sind.

3. Webseiten-Vorlage nach einem der voranstehenden Ansprüche,
wobei die Daten aus dem Prozessabbild aktuelle Prozesswerte und/oder aktuelle Messwerte sind.

4. Webseiten-Vorlage nach einem der voranstehenden Ansprüche,
wobei ein Parameter Einfluss auf die Darstellung einer Navigationsleiste der aufgerufenen Web-Seite hat.

5. Webseiten-Vorlage nach einem der voranstehenden Ansprüche,
wobei die Vorlage eine HTML-Datei ist.

6. Prozessgerät, mit geräteseitigem Web-Server das aus der Gruppe bestehend aus Füllstandmessgerät, Druckmessgerät, Endschalter, Feldgerät, Sensor (14), Aktuator (15), Durchflussmessgerät und Schnittstellenwandler (13, 23) ausgewählt ist, umfassend einen Web-Server mit einem Datenspeicher, in dem zumindest eine in einer Seitenbeschreibungssprache definierte Webseiten-Vorlage abgespeichert ist,
wobei in den Webseiten-Vorlagen jeweils mehrere Platzhalter und Schlüsselworte vorhanden sind,
wobei von einem Anwender bestimmbare Parameternamen, denen jeweils ein Parameterwert zugeordnet ist, zusammen mit der Webseiten-Anforderung mittels eines Web-Browser mitgesandt werden, und überall dort, wo in der vom Web-Browser angeforderten Vorlage ein Platzhalter mit einem der Parameternamen identisch ist, dieser Platzhalter durch den diesem Parameternamen zugehörigen Parameterwert zu ersetzen ist, und
wobei die Schlüsselworte durch zugeordnete aktuelle Informationen zu ersetzen sind, so dass basierend auf einer einzigen Vorlage vom Anwender individualisierte Darstellungen der Webseiten mit aktuellen Informationen auf einem Display (10, 11, 12) darstellbar sind.

7. Prozessgerät nach Anspruch 6,
wobei der Web-Server (14, 15) über eine Datenverbindung (6, 7) mit dem von einem Anwender zu bedienenden Web-Browser verbindbar ist.

8. Verfahren zum Aufrufen einer Webseite, umfassend
- Herstellen einer Verbindung zu einem Web-Server (14, 15) eines Prozessmessgeräts aus der Gruppe bestehend aus Füllstandmessgerät, Druckmessgerät, Endschalter, Feldgerät, Sensor (14), Aktuator (15), Durchflussmessgerät und Schnittstellenwandler (13, 23) über einen Web-Browser, wobei auf dem Web-Server zumindest eine Webseiten-Vorlage abgespeichert ist, die in einer Seitenbeschreibungssprache definiert ist und die zumindest einen Platzhalter enthält sowie sogenannte Schlüsselworte beinhaltet, die durch aktuelle Daten aus einem Prozessabbild ersetzt werden.,
- Aufrufen einer der Webseiten-Vorlagen mittels des Web-Browsers,
- Übergeben eines Parameterwertes mit dem Webseiten-Aufruf, wobei der übergebene Parameterwert eine vom Anwender gewünschte Darstellung einer abgespeicherten Vorlage repräsentiert,
- Ersetzen der Platzhalter in der aufgerufenen Webseiten-Vorlage durch den Parameterwert, wodurch die Webseiten-Vorlage gemäß den Wünschen des Anwenders modifiziert ist, und
- Übergeben der modifizierten Vorlage an den Web-Browser.

9. Verfahren nach Anspruch 8,
wobei nach dem Übergeben der neu generierten Vorlage der Schritt des Darstellens der Webseite auf einem Display (10, 11,12) entsprechend der modifizierten Webseiten-Vorlage erfolgt.

10. Verfahren nach Anspruch 8 oder 9,
wobei eine Webseiten-Vorlage mehrere verschiedene Platzhalter enthält und ein Parameter aus Parametername und Parameterwert besteht, und wobei mit dem Aufruf der Webseiten-Vorlage mehrere Parameter übergeben werden und in der vom Web-Browser angeforderten Webseiten-Vorlage überall dort, wo ein Platzhalter mit einem Parameternamen identisch ist, dieser Platzhalter durch den entsprechenden übergebenen Parameterwert ersetzt wird.

11. Verfahren nach Anspruch 10,
wobei die Parameterwerte vom Anwender vorgebbar sind.

12. Verfahren nach Anspruch 10,
wobei die Daten aktuelle Prozess- bzw. Messwerte sind.

13. Verfahren nach Anspruch 12,
wobei das Ersetzen der Schlüsselworte durch die aktuellen Daten mittels eines Interpreters erfolgt.

14. Verfahren nach Anspruch 13,
wobei das Ersetzen der Schlüsselworte durch die aktuellen Daten nach dem Ersetzen der Platzhalter durch übergebene Parameterwerte in der modifizierten Vorlage erfolgt.

15. Verfahren nach einem der Ansprüche 8-14,
wobei der Web-Server über eine Datenverbindung mit dem Web-Browser verbunden ist, der von einem Anwender zu bedienen ist.

16. Verfahren nach einem der Ansprüche 8-15,
wobei ein oder mehrere Parameter übergeben werden, die auf die Darstellung und Funktion einer Navigationsleiste Einfluss haben.

17. System zur Darstellung von durch einen Anwender individualisierten Webseiten, umfassend
- ein Anwenderterminal (10, 11, 12) mit einer Dateneingabeeinrichtung und einer Webseiten-Darstellungseinrichtung zum Anzeigen von Webseiten,
- zumindest ein Prozessgerät aus der Gruppe bestehend aus Füllstandmessgerät, Druckmessgerät, Endschalter, Feldgerät, Sensor (14, 15), Aktuator, Durchflussmessgerät und Schnittstellenwandler (13, 23), das einen Webserver und einen Datenspeicher aufweist und über eine Datenfernverbindung mit dem Anwenderterminal verbunden ist,
wobei auf dem Datenspeicher des Prozessgerätes (14, 15) zumindest eine Webseiten-Vorlage, die in einer Seitenbeschreibungssprache definiert ist, abgespeichert ist,
wobei die abgespeicherte Webseiten-Vorlage zumindest einen Platzhalter und mehrere Schlüsselworte enthält,
wobei von einem Anwender über die Dateneingabeeinrichtung (10, 11, 12) bestimmbare Parametemamen, denen jeweils ein Parameterwert zugeordnet ist, zusammen mit einer Webseiten-Anforderung mittels eines Web-Browser über die Datenfernverbindung (6, 7) mitgesandt werden, und überall dort, wo in der vom Web-Browser angeforderten Vorlage ein Platzhalter mit einem der Parameternamen identisch ist, dieser Platzhalter durch den diesem Parameternamen zugehörigen Parameterwert ersetzt wird, und
wobei die Schlüsselworte durch aktuelle Daten ersetzt werden, so dass basierend auf einer einzigen Vorlage vom Anwender individualisierte Darstellungen der Webseiten mit aktuellen Informationen auf der Webseiten-Darstellungseinrichtung (10, 11, 12) gezeigt werden.

18. System nach Anspruch 17,
wobei das Prozessgerät einen Internetserver (133), einen Intemetseiten-Generator (139), einen Layout-Speicher (138) für Internetseiten, FTP-Client / Server-Einheiten (137) sowie mindestens eine für digitale Kommunikation geeignete Schnittstelle (3, 7, 20) aufweist.

19. System nach Anspruch 17 oder 18,
wobei das Prozessgerät mindestens eine für digitale Kommunikation geeignete Schnittstelle, Mittel zum Verarbeiten von Internetprotokollen und Internetdiensten, wie zur Kommunikation über Intemet-Browser, E-Mail-Dienste und/oder FTP-Client-Dienste, sowie Mittel zum Ablegen von Dateien mit Standardwerkzeugen als Vorlagen in einem File-System und zusätzlich zur Sicherung in einem nichtflüchtigen Speicherbereich (143) umfassen.

20. System nach einem der Ansprüche 17-19,
wobei die digitale Schnittstelle für das Einspielen der Vorlage-Dateien und die Schnittstelle für die Vernetzung der Geräte untereinander identisch sind.

21. System nach einem der Ansprüche 17-19,
wobei für das Einspielen der Vorlage-Dateien ein gesondertes Interface vorgesehen ist.

## Claims

1. A web page template that
- is stored in a processing device with device-inherent web server which is selected from the group consisting of a filling level measuring device, a pressure measuring device, a termination switch, a field device, a sensor (14), an actuator (15), a flow meter and interface converters (13, 23),
- is defined in a page description language,
- can be stored on a web server and
- contains at least one wildcard and one keyword,
wherein the wildcard is to be replaced by a parameter and the parameter can be transmitted along with a request for the web page that is based on the template with the aid of a web browser and can be defined by a user, and
wherein the keyword is to be replaced by data from a process map such that different representations of web pages that are based on the called template, said representations being adapted to the user's needs, can be generated together with current data by means of a single stored template.

2. The web page template according to Claim 1,
wherein the template contains several different wildcards and a parameter comprises a parameter name and a corresponding parameter value, wherein the wildcard is to be replaced by the parameter value that belongs to the corresponding parameter name at all locations where the wildcard is identical to the parameter name in the template requested by the web browser, and
wherein several keywords are available which are to be replaced by current process data.

3. The web page template according to anyone of the preceding claims, wherein the data from the process map consists of current process values and/or current measurement values.

4. The web page template according to anyone of the pre ceding claims, wherein a parameter has an influence on the representation of a navigation bar of the called web page.

5. The web page template according to one of the preceding claims, wherein the template consists of an HTML file.

6. A processing device with a device-inherent web server, said processing device being selected from the group consisting of a filling level measuring device, a pressure measuring device, a termination switch, a field device, a sensor (14), an actuator (15), a flow meter and interface converters (13, 23), wherein said processing device comprises a web server with a data memory in which at least one web page template defined in a page description language is stored,
wherein the web page templates respectively contain several wildcards and keywords,
wherein parameter names that can be defined by a user and are respectively assigned a parameter value are transmitted along with the web page request by means of a web browser and a wildcard is to be replaced by the parameter value that belongs to the corresponding parameter name at all locations where this wildcard is identical to one of the parameter names in the template requested by the web browser, and
wherein the keywords are to be replaced by corresponding current information such that representations of the web pages that are personalized by the user can be visualized on a display (10, 11, 12) together with current information based on a single template.

7. The processing unit according to Claim 6,
wherein the web server (14, 15) can be connected to the web browser, which is to be operated by a user, via a data link (6, 7).

8. A method for calling a web page, said method comprising the steps of
- establishing a connection to a web server (14, 15) of a process measurement device from the group consisting of a filling level measuring device, a pressure measuring device, a termination switch, a field device, a sensor (14), an actuator (15), a flow meter and interface converters (13, 23) by means of a web browser, wherein at least one web page template that is defined in a page description language and contains at least one wildcard as well as so-called keywords which are to be replaced with current data from a process map is stored on said web server,
- calling one of the web page templates by means of the web browser,
- transmitting a parameter value along with the web page request, wherein the transmitted parameter value represents a user-specific representation of a stored template,
- replacing the wildcard by the parameter in the called web page template such that the web page template is modified in accordance with the user's wishes, and
- transmitting the modified template to the web browser.

9. The method according to Claim 8,
wherein, after the transmission of the newly generated template, the step of visualizing said web page on a display (10, 11, 12) is performed in accordance with the modified web page template.

10. The method according to Claim 8 or 9,
wherein a web page template contains several different wildcards and a parameter consists of a parameter name and a parameter value, and wherein several parameters are transmitted along with the request for the web page template and a wildcard is replaced by the corresponding transmitted parameter value in the web page template requested by the web browser at all locations where this wildcard is identical to a parameter name.

11. The method according to Claim 10,
wherein the parameter values can be defined by the user.

12. The method according to Claim 10,
wherein the data consist of current process values or measurement values, respectively.

13. The method according to Claim 12,
wherein the keywords are replaced by current data by means of an interpreter.

14. The method according to Claim 13,
wherein the keywords are replaced by the current data after the wildcards have been replaced by transmitted parameter values in the modified template.

15. The method according to anyone of Claims 8 to 14,
wherein the web server is connected to the web browser to be operated by a user via a data link.

16. The method according to anyone of Claims 8 to 15,
wherein one or more parameters that have an influence on the representation and the function of a navigation bar are transmitted.

17. A system for visualizing web pages that are personalized by a user, comprising
- a user terminal (10, 11, 12) with a data input device and a web page display device for displaying web pages,
- at least one processing device from the group consisting of a filling level measuring device, a pressure measuring device, a termination switch, a field device, sensors (14, 15), actuators, a flow meter and interface converters (13, 23), wherein said processing device features a web server and a data memory and is connected to the user terminal via a remote data link,
wherein at least one web page template defined in a page description language is stored in the data memory of the processing unit (14, 15),
wherein the stored web page template contains at least one wildcard and several keywords,
wherein definable parameter names that are respectively assigned a parameter value by a user by means of the data input device (10, 11, 12) are transmitted by means of a web browser along with a web page request via the remote data link (6, 7), and wherein a wildcard is replaced by the parameter value that belongs to a parameter name at all locations where this wildcard is identical to one of the parameter names in the template requested by the web browser, and
wherein the keywords are replaced by current data such that representations of the web pages that are personalized by the user can be displayed on the web page display device (10, 11, 12) together with current information based on a single template.

18. The system according to Claim 17,
wherein the processing device features an Internet server (133), an Internet page generator (139), a layout memory (138) for Internet pages, FTP client/server units (137), as well as at least one interface (3, 7, 20) that is suitable for digital communication.

19. The system according to Claim 17 or 18,
wherein the processing device comprises at least one interface that is suitable for a digital communication, means for processing Internet protocols and Internet services, e.g. for communication via Internet browsers, e-mail services and/or FTP client services as well as means for storing files in a file system, said files being stored in the form of templates with the aid of standard tools, and, as an additional security measure, in a memory area of a non-volatile memory (143) .

20. The system according to anyone of Claims 17 to 19,
wherein the digital interface for importing the template files and the interface for interconnecting the devices to each other are identical.

21. The system according to anyone of Claims 17 to 19,
wherein a separate interface is provided for importing the template files.

## Revendications

1. Modèle de pages web,
- qui est stocké sur un appareil à processeur avec serveur web du côté appareil, choisi parmi le groupe constitué des instruments de mesure de niveau de remplissage, manomètres, commutateurs de fin de course, appareils de champ, capteurs (14), actionneurs (15), débitmètres et capteurs d'interface (13, 23)
- qui est défini dans un langage d'écriture de pages,
- qui peut être stocké sur un serveur web et
- qui contient au moins un champ de remplacement et un mot clé,
dans lequel le champ de remplacement est à remplacer par un paramètre et le paramètre est envoyé conjointement avec un appel de la page web basée sur le modèle, à l'aide d'un navigateur web et peut être défini par un utilisateur, et
dans lequel le mot clé est à remplacer par des données provenant d'une image d'un procédé, ce par quoi des représentations différentes de pages web basées sur le modèle appelé, adaptées aux besoins de l'utilisateur, peuvent être générées avec des données actualisées, avec un seul modèle stocké.

2. Modèle de page web selon la revendication 1,
dans lequel plusieurs champs de remplacement différents sont présents dans le modèle et un paramètre comprend un nom de paramètre et une valeur de paramètre correspondante, et partout où, dans le modèle appelé à partir du navigateur web, le champ de remplacement est identique au nom de paramètre, le champ de remplacement est à remplacer par la valeur de paramètre associée au nom de paramètre correspondant et dans lequel plusieurs mots clés sont présents, qui sont à remplacer par des données de procédé actualisées.

3. Modèle de pages web selon l'une des revendications précédentes,
dans lequel les données provenant de l'image du procédé sont des valeurs de procédé actualisées et/ou des valeurs de mesures actualisées.

4. Modèle de pages web selon l'une des revendications précédentes, dans lequel un paramètre a une influence sur la représentation d'une barre de navigation de la page web appelée.

5. Modèle de pages web selon l'une des revendications précédentes, dans lequel le modèle est un fichier HTML.

6. Appareil à processeur avec serveur web du côté appareil, choisi parmi le groupe constitué des instruments de mesure de niveau de remplissage, manomètres, commutateurs de fin de course, appareils de champ, capteurs (14), actionneurs (15), débitmètres et capteurs d'interface (13, 23), comprenant un serveur web avec une mémoire de données dans laquelle est stocké au moins un modèle de pages web défini dans un langage d'écriture de pages,
dans lequel respectivement plusieurs champs de remplacement et mots clés sont présents dans les modèles de pages web,
dans lequel des noms de paramètres pouvant être définis par un utilisateur, auxquels est chaque fois associé à une valeur de paramètre, sont envoyés conjointement avec l'appel de page web au moyen d'un navigateur web, et partout où, dans le modèle appelé par le navigateur web, un champ de remplacement est identique à l'un des noms de paramètre, ce champ de remplacement est à remplacer par la valeur de paramètre associée à ce nom de paramètre, et
dans lequel les mots clés sont à remplacer par des informations associées actualisées, de sorte que, sur la base d'un modèle unique, des représentations personnalisées des pages web peuvent être représentées sur un écran (10, 11, 12) avec des informations actualisées.

7. Modèle de pages web selon la revendication 6,
dans lequel le serveur web (14, 15) peut être relié par une liaison de données (6, 7) au navigateur web à utiliser par un utilisateur.

8. Procédé pour appeler une page web, comprenant les étapes qui consistent à
- établir une liaison vers un serveur web (14, 15) d'un instrument de mesure de procédé choisi parmi le groupe constitué des instruments de mesure de niveau de remplissage, manomètres, commutateurs de fin de course, appareils de champ, capteurs (14), actionneurs (15), débitmètres et capteurs d'interface (13, 23), par l'intermédiaire d'un navigateur web, au moins un modèle de page web, qui est défini dans un langage d'écriture de pages et qui contient au moins un champ de remplacement ainsi que des mots dits clés qui sont remplacés par des données actualisées provenant d'une image de procédé, étant stocké sur le serveur web,
- appeler l'un des modèles de pages web au moyen du navigateur web,
- transmettre une valeur de paramètre avec l'appel de page web, la valeur de paramètre transmise représentant une représentation souhaitée par l'utilisateur d'un modèle stocké,
- remplacer les champs de remplacement dans le modèle de page web appelé par la valeur de paramètre, ce par quoi le modèle de page web est modifié selon les souhaits de l'utilisateur, et
- transmettre le modèle modifié au navigateur web.

9. Procédé selon la revendication 8,
dans lequel après la transmission du nouveau modèle généré s'opère l'étape de la représentation de la page web sur un écran (10, 11, 12) conformément au modèle de pages web modifié.

10. Procédé selon la revendication 8 ou 9,
dans lequel un modèle de page web contient plusieurs champs de remplacement différents et un paramètre constitué d'un nom de paramètre et d'une valeur de paramètre, et dans lequel plusieurs paramètres sont transmis avec l'appel du modèle de page web et partout où, dans le modèle de page web appelé à partir du navigateur web, un champ de remplacement est identique à un nom de paramètre, ces champs de remplacement sont remplacés par la valeur de paramètre correspondante transmise.

11. Procédé selon la revendication 10,
dans lequel les valeurs de paramètres peuvent être données par l'utilisateur.

12. Procédé selon la revendication 10,
dans lequel les données sont des valeurs de procédé ou respectivement de mesure actualisées.

13. Procédé selon la revendication 12,
dans lequel le remplacement des mots clés par les données actualisées s'effectue au moyen d'un interprète.

14. Procédé selon la revendication 13,
dans lequel le remplacement des mots clés par les données actualisées dans le modèle modifié s'effectue après le remplacement des champs de remplacement par des valeurs de paramètres transmises.

15. Procédé selon l'une des revendications 8 à 14,
dans lequel le serveur web est relié, par une liaison de données, au navigateur web qui doit être utilisé par l'utilisateur.

16. Procédé selon l'une des revendications 8 à 15,
dans lequel sont transmis un ou plusieurs paramètres qui ont une influence sur la représentation et le fonctionnement d'une barre de navigation.

17. Système de représentation de pages web personnalisées par un utilisateur, comprenant
- un terminal utilisateur (10, 11, 12) comportant un dispositif de saisie de données et un dispositif de représentation de pages web pour afficher des pages web,
- au moins un appareil de procédé choisi parmi le groupe constitué des instruments de mesure de niveau, manomètres, commutateurs de fin de course, appareils de champ, capteurs (14, 15), actionneurs, débitmètres et capteurs d'interfaces (13, 23), qui comporte un serveur web et une mémoire de données et est relié au terminal utilisateur par l'intermédiaire d'une liaison de données à distance,
dans lequel au moins un modèle de pages web de l'appareil à processeur (14, 15) qui est défini dans un langage d'écriture de pages est stocké dans la mémoire de données de l'appareil de procédé (14, 15),
dans lequel le modèle de pages web stocké contient au moins un champ de remplacement et plusieurs mots clés,
dans lequel des noms de paramètres pouvant être définis par l'utilisateur par l'intermédiaire du dispositif de saisie de données (10, 11, 12), auxquels est associée chaque fois une valeur de paramètre, sont envoyés conjointement avec un appel de pages web au moyen d'un navigateur web par l'intermédiaire de la liaison de données à distance (6, 7), et partout où, dans le modèle appelé à partir du navigateur web, un champ de remplacement est identique à un nom de paramètre, ce champ de remplacement est remplacé par la valeur de paramètre associée à ce nom de paramètre correspondant, et
dans lequel les mots clés sont remplacés par des données actualisées, de sorte que des représentations des pages web personnalisées par l'utilisateur, s'appuyant sur un modèle unique, sont montrées avec des informations actualisées sur le dispositif de représentation de pages web (10, 11, 12).

18. Système selon la revendication 17,
dans lequel l'appareil de procédé comporte un serveur Internet (133), un générateur de pages Internet (139), une mémoire de mise en page (138) pour pages Internet, des unités client/serveur FTP (137) ainsi qu'au moins une interface (3, 7, 20) apte à la communication numérique.

19. Système selon la revendications 17 ou 18,
dans lequel l'appareil de procédé comprend au moins une interface adaptée pour la communication numérique, des moyens de traitement de protocoles Internet et de services Internet, ainsi que, pour la communication par navigateur Internet, des services de courrier électronique et/ou des services client FTP, ainsi que des moyens pour déposer des fichiers avec des outils standard sous forme de modèles dans un système de fichiers et en outre aux fins de sécurisation dans une zone de mémoire non volatile (143).

20. Système selon l'une des revendications 17 à 19,
dans lequel l'interface numérique d'installation des fichiers de modèle et l'interface de mise en réseau des appareils sont identiques l'une à l'autre.

21. Système selon l'une des revendications 17 à 19,
dans lequel une interface distincte est prévue pour installer des fichiers de modèle.
